# EUROPEAN PATENT APPLICATION

(11) **EP 3 376 054 A1**
(43) Date of publication of application: **19.09.2018**
(21) Application number: 18162039.4
(22) Date of filing: 15.03.2018
(51) Int. Cl.: F04D 29/58, F04D 25/08, F04D 17/16, F04D 29/42

(54) **BLOWER AND VACUUM CLEANER**

(30) Priority: 17.03.2017 US 201762472765 P; 21.07.2017 JP 2017142250; 15.09.2017 JP 2017178335; 15.09.2017 JP 2017178336
(71) Applicant: Nidec Corporation, Minami-ku Kyoto 601-8205 (JP)
(72) Inventor: HAYAMITSU, Ryosuke, Kyoto, 601-8205 (JP)
(74) Representative: Stöckeler, Ferdinand

(57) **Abstract**

A blower includes an impeller (20), a motor (10) that rotates the impeller (20), an electronic component that is disposed below a stator (13) in an axial direction, and a circuit board (50) that is disposed below a motor housing (30) in the axial direction. The motor housing (30) includes a motor housing inlet that has a cylindrical shape extending in the axial direction, that extends below a lower end of a blower housing (40) in the axial direction and surrounds an outer side of the electronic component in a radial direction, that is formed below the lower end of the blower housing (40) in the axial direction, and that allows an inner side and an outer side of the motor housing (30) in the radial direction to communicate with each other.

## Description

### Field of the Invention

The present disclosure relates to a blower and a vacuum cleaner including the blower.

### Description of the Related Art

An existing electric blower is disclosed in Japanese Unexamined Patent Application Publication No. 2002-021794. The electric blower includes a motor portion and a fan portion that is provided on an output side of a shaft of the motor portion. The fan portion includes an impeller, an air guide that is disposed at an outer peripheral portion of the impeller and that forms a ventilation path that guides an airflow which flows out from the impeller to the motor portion, and a load-side bracket that covers the impeller and the air guide. A plurality of openings that introduce the airflow from the air guide into the motor portion are provided in the load-side bracket.

When the electric blower rotates, the impeller rotates and a suction force is generated, so that intake air flows into the impeller from a suction opening of a casing, and the intake air is discharged from an outer periphery of the impeller. Airflow discharged from the outer periphery of the impeller reaches an upper surface of the load-side bracket at the motor portion, passes through the openings of the load-side bracket, and is guided into the motor portion.

A first substrate and a second substrate included in a circuit portion that controls the motor portion are disposed in the inside of the motor portion. The first substrate and the second substrate are cooled by the airflow guided into the motor portion.

### SUMMARY OF THE INVENTION

However, in the electric blower that is described in Japanese Unexamined Patent Application Publication No. 2002-021794, since the substrates are disposed in a channel for the airflow generated by the impeller and the airflow strikes the substrates, the substrates become channel resistances in the airflow, as a result of which blowing efficiency may be reduced.

An exemplary blower of the present disclosure includes an impeller that is rotatable around a central axis extending vertically; a motor that includes a stator and a rotor and that together with the rotor rotates the impeller; a motor housing, at least a part of the motor housing being disposed on an outer side of the motor in a radial direction; a blower housing that is disposed on an outer side of the impeller in the radial direction, and that opposes an outer surface of the motor housing in the radial direction with a gap therebetween; an electronic component that is disposed below the stator in an axial direction; and a circuit board that is disposed below the motor housing in the axial direction. The motor housing includes a motor housing inlet that has a cylindrical shape extending in the axial direction, that extends below a lower end of the blower housing in the axial direction and surrounds an outer side of the electronic component in the radial direction, that is formed below the lower end of the blower housing in the axial direction, and that allows an inner side and an outer side of the motor housing in the radial direction to communicate with each other.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a vacuum cleaner according to an embodiment;
Fig. 2 is a perspective view of a blower according to an embodiment;
Fig. 3 is a vertical sectional view of the blower shown in Fig. 2;
Fig. 4 is an exploded perspective view of the blower shown in Fig. 2;
Fig. 5 is a perspective view of an upper motor housing and a stator core as viewed from therebelow;
Fig. 6 is a bottom view of the upper motor housing and the stator core;
Fig. 7 is a perspective view of a lower motor housing;
Fig. 8 is a plan view of the lower motor housing;
Fig. 9 is an enlarged sectional view of a motor housing inlet;
Fig. 10 is a bottom view of a motor and an upper motor housing according to another embodiment of the present disclosure;
Fig. 11 is a perspective view of a blower according to another embodiment;
Fig. 12 is a vertical sectional view of the blower shown in Fig. 11;
Fig. 13 is an exploded perspective view of the blower shown in Fig. 11;
Fig. 14 is a perspective view of a motor and an upper motor housing as viewed from therebelow;
Fig. 15 is a plan view of a circuit board and a circuit-board case surrounding the circuit board;
Fig. 16 is a perspective view of an example of the circuit-board case that is used in the blower shown in Fig. 11;
Fig. 17 is a plan view of the circuit-board case shown in Fig. 16;
Fig. 18 is a bottom view of the circuit-board case; and
Fig. 19 is a vertical sectional view of a circuit-board case.

### DETAILED DESCRIPTION OF THE PREFERRED EMBODIMENTS

Exemplary embodiments of the present disclosure are described in detail below with reference to the drawings. In the description, in a blower A, a direction parallel to a central axis C of the blower A is an "axial direction", a direction orthogonal to the central axis C of the blower A is a "radial direction", and a direction along an arc around the central axis C of the blower A is a "peripheral direction". In the present description, in the blower A, the shape of each portion and positional relationships between the portions are described with the axial direction being a vertical direction and a side of an intake opening 43 of an impeller cover 41 with respect to an impeller 20 being an upper side. The term "vertical direction" is a name that is used simply for description, and does not limit the positional relationships and directions in the state of use of the blower A. "Upstream" and "downstream" refer to upstream and downstream, respectively, in a direction of circulation of an airflow S that is generated when the impeller 20 is rotated.

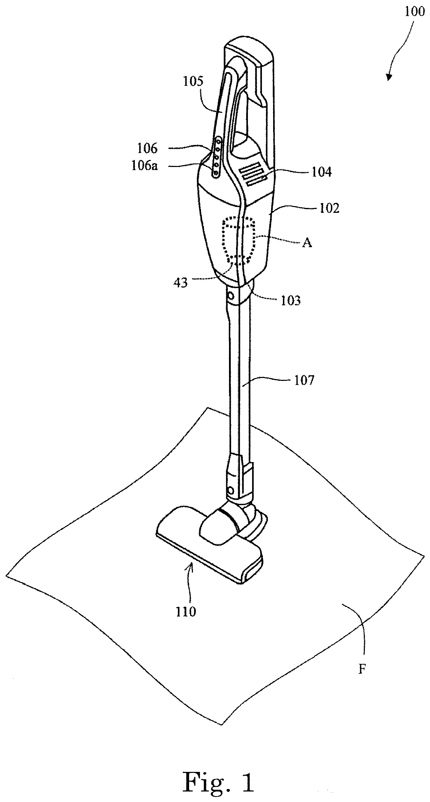

In the present description, in a vacuum cleaner 100, the shape of each portion and positional relationships between the portions are described with a direction towards a floor F (cleaning surface to be cleaned) in Fig. 1 being a "lower side", and a direction away from the floor F being an "upper side". These directions are names that are used simply for description, and do not limit the positional relationships and directions in the state of use of the vacuum cleaner 100. "Upstream" and "downstream" refer to upstream and downstream, respectively, in a direction of circulation of air sucked in from an intake portion 103 when the blower A is driven.

An exemplary vacuum cleaner 100 of an embodiment of the present disclosure is described below. Fig. 1 is a perspective view of the vacuum cleaner 100 according to the embodiment. The vacuum cleaner 100 is a so-called stick-type electric vacuum cleaner, and includes a casing 102 including the intake portion 103 and an exhaust portion 104 provided in a lower surface and an upper surface of the casing 102, respectively. A power supply cord (not shown) is led out from a back surface of the casing 102. The power supply cord is connected to a power supply socket (not shown) in, for example, a side wall of a living room to supply electrical power to the vacuum cleaner 100. The vacuum cleaner 100 may be a so-called robot-type electric vacuum cleaner, a canister-type electric vacuum cleaner, or a handy-type electric vacuum cleaner.

An air path (not shown) that connects the intake portion 103 and the exhaust portion 104 is formed in the casing 102. A dust collecting portion (not shown), a filter (not shown), and the blower A are disposed in this order in the inside of the air path from the upstream side towards the downstream side. Dirt, such as dust, contained in air that circulates in the inside of the air path is intercepted by the filter, and is collected in the inside of the dust collecting portion having the form of a container. The dust collecting portion and the filter are formed so as to be removable from the casing 102.

A holding portion 105 and an operating portion 106 are provided at an upper portion of the casing 102. A user can hold the holding portion 105 and move the vacuum cleaner 100. The operating portion 106 includes a plurality of buttons 106a. The vacuum cleaner 100 is operated and set by operating the buttons 106a. For example, by operating the buttons 106a, instructions are given to, for example, start driving the blower A, stop driving the blower A, or change the rotation speed of the blower A. A cylindrical suction tube 107 is connected to the intake portion 103. A suction nozzle 110 is mounted on an upstream end (lower end in the figure) of the suction tube 107 so as to be removable from the suction tube 107.

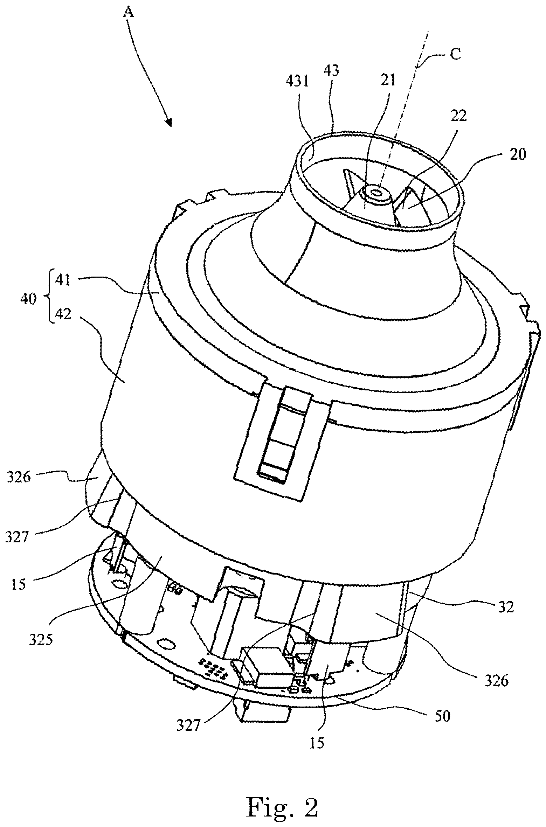

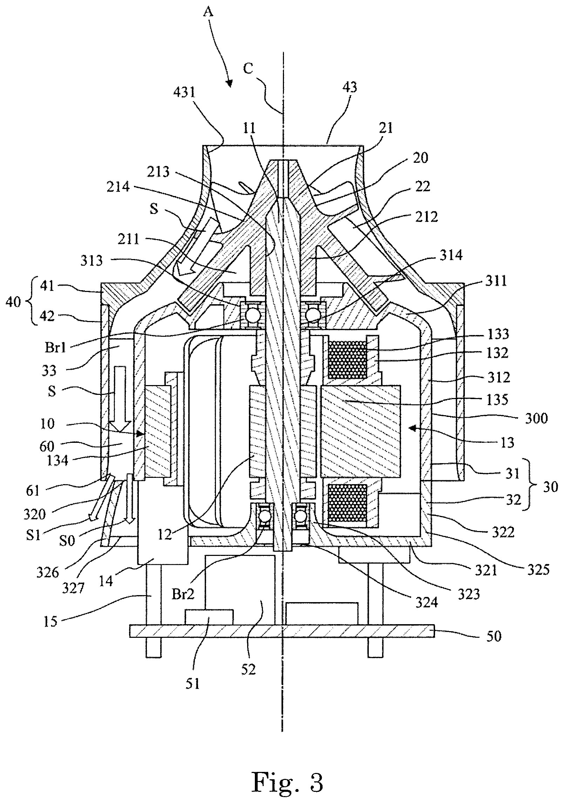

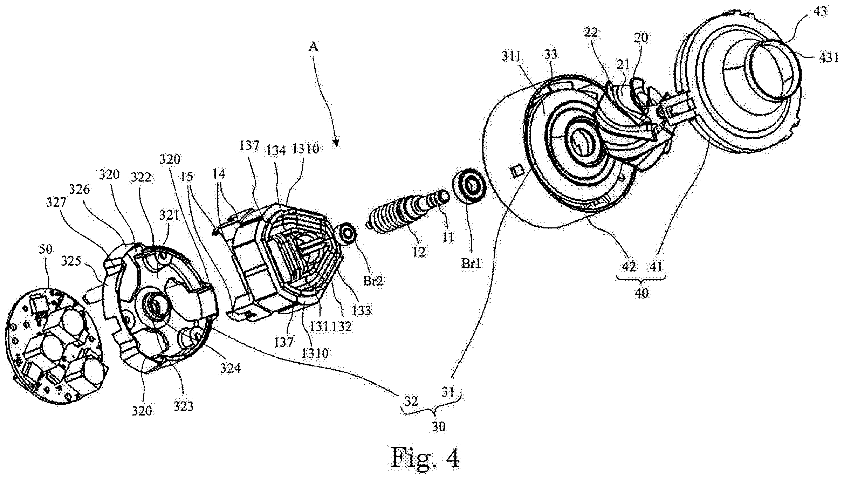

Fig. 2 is a perspective view of the blower according to an embodiment. Fig. 3 is a vertical sectional view of the blower shown in Fig. 2. Fig. 4 is an exploded perspective view of the blower shown in Fig. 2. The blower A is mounted on the vacuum cleaner 100 and sucks air.

The blower A includes a motor 10, the impeller 20, a motor housing 30, a blower housing 40, and a circuit board 50. In the blower A, the impeller 20 and the motor housing 30 are accommodated in the blower housing 40. In the embodiment, the blower housing 40 accommodates the upper side of the motor housing 30. As shown in Fig. 3, a channel 60 is formed in a gap between the blower housing 40 and an upper motor housing 31 (described later) of the motor housing 30. An upper end (upstream end) of the channel 60 is connected to the impeller cover 41 (described below). An exhaust portion 61 is formed at a lower end (downstream end) of the channel 60.

The motor 10 is accommodated in the motor housing 30. The impeller 20 rotates around a central axis C extending vertically. The motor 10 is disposed below the impeller 20, and rotates the impeller 20. The rotation of the motor 10 causes the impeller 20 to rotate around the central axis C, so that the airflow S is generated. The airflow S that is generated by the rotation of the impeller 20 is discharged from the exhaust portion 61 via the channel 60. As shown in Fig. 3, the motor 10 accommodated in the motor housing 30 is disposed below the impeller 20. In the description below, airflow that flows through the channel 60 is also called the airflow S.

The motor 10 is a so-called inner-rotor-type motor. The motor 10 includes a shaft 11, a rotor 12, and a stator 13. That is, the motor 10 includes the stator 13 and the rotor 12.

The shaft 11 has a circular columnar shape. The shaft 11 is disposed along the central axis C. As shown in Fig. 3, the shaft 11 extends through an upper axial hole 314 in an upper housing top plate portion 311 (described later) of the upper motor housing 31. The impeller 20 is secured to an end portion of the shaft 11 that protrudes from the upper housing top plate portion 311. The shaft 11 is rotatably supported by an upper bearing Br1 and a lower bearing Br2.

The upper bearing Br1 and the lower bearing Br2 are ball bearings. The shaft 11 is secured to an inner ring of the upper bearing Br1 and an inner ring of the lower bearing Br2. Examples of securing methods that are used include a bonding-and-insertion method and a press-fitting method. An outer ring of the upper bearing Br1 is secured to the upper motor housing 31, and an outer ring of the lower bearing Br2 is secured to a lower motor housing 32. The upper bearing Br1 and the lower bearing Br2 are not limited to ball bearings.

The rotor 12 is secured to the shaft 11. The rotor 12 rotates together with the shaft 11. That is, the rotor 12 is secured to the shaft 11, and rotates together with the shaft 11. The rotor 12 includes a plurality of magnets (not shown). The plurality of magnets are secured to an outer peripheral surface of the shaft 11. The plurality of magnets are such that N-pole magnetic pole surfaces and S-pole magnetic pole surfaces are alternately arranged side by side.

Instead of the plurality of magnets, a single ring-shaped magnet may be used. In this case, the magnet may be alternately magnetized at an N pole and an S pole in the peripheral direction. The magnet may be integrally molded out of resin mixed with magnetic powder.

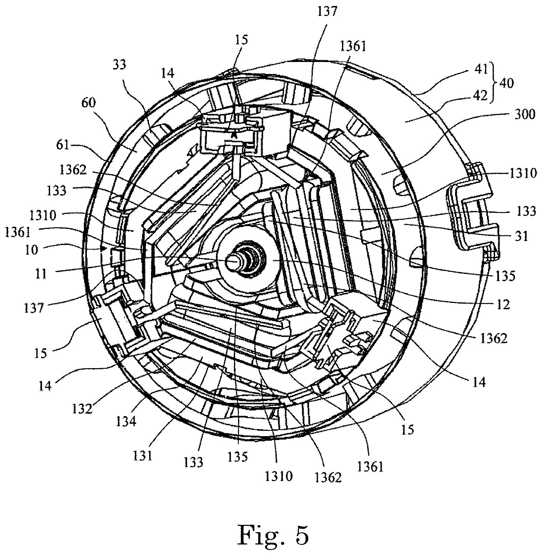

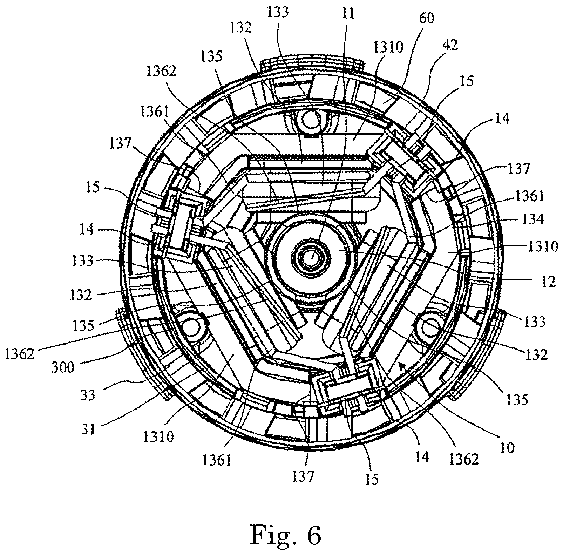

Fig. 5 is a perspective view of the motor and the upper motor housing as viewed from therebelow. Fig. 6 is a bottom view of the motor and the upper motor housing. In the motor 10, the stator 13 is disposed on an outer side of the rotor 12 in the radial direction. The rotor 12 is disposed on an inner side of the stator 13 in the radial direction. That is, the motor 10 is an inner-rotor-type motor. The stator 13 includes a stator core 131, an insulator 132, and coils 133. The stator core 131 is a laminated body formed from electromagnetic steel plates that are laminated in the axial direction (the vertical direction in Fig. 3). The stator core 131 is not limited to a laminated body formed from electromagnetic steel plates that are laminated, and may be, for example, a single member formed by, for example, casting or firing powder.

The ring-shaped stator core 131 includes a ring-shaped core back 134 and a plurality of (here, three) teeth 135. The ring-shaped stator core 131 includes a plurality of (here, three) split stator cores 1310. Split stator cores 1310 that are adjacent to each other in the peripheral direction are joined to each other at corresponding joining portions 137, and the ring-shaped stator core 131 is formed. The method of joining the split stator cores 1310 at the corresponding joining portions 137 may be, for example, welding or bonding. However, the method is not limited thereto. It is possible to widely use methods that allow split stator cores 134 that are adjacent to each other in the peripheral direction to be firmly joined to each other.

The split stator cores 1310 have the same shape. One tooth 135 is provided on each split stator core 1310. When the split stator cores 1310 are disposed side by side in the peripheral direction and joined to each other, the teeth 135 are formed in a radial manner so as to extend inward in the radial direction from an inner peripheral surface of the core back 134 towards the rotor 12. This causes the plurality of teeth 135 to be disposed in the peripheral direction.

The stator 13 includes the plurality of coils 133. The coils 133 are formed by winding conducting wires around the teeth 135 via the insulator 132. That is, the plurality of coils 133 are formed by winding conducting wires around the stator core 131 opposing the rotor 12 in the radial direction via the insulator 132. Each coil 133 is formed by winding one continuous conducting wire having a winding starting end portion and a winding ending end portion. In the description below, each winding starting end portion is defined as a winding starting conducting wire 1361 and each winding ending end portion is defined as a winding ending conducting wire 1362. In addition, in the motor 10, the winding starting conducting wire 1361 of a coil 133 and the winding ending conducting wire 1362 of an adjacent coil 133 are connected to each other.

For example, when the three coils 133 are a U-phase coil, a V-phase coil, and a W-phase coil, the winding ending conducting wire 1362 of the U-phase coil and the winding starting conducting wire 1361 of the V-phase coil are connected to each other, the winding ending conducting wire 1362 of the V-phase coil and the winding starting conducting wire 1361 of the W-phase coil are connected to each other, and the winding ending conducting wire 1362 of the W-phase coil and the winding starting conducting wire 1361 of the U-phase coil are connected to each other. That is, in the motor 10, the three coils 133 are connected to each other by delta connection. In the motor 10, by connecting the three coils 133 by delta connection, wiring is facilitated, so that it is possible to correspondingly improve work efficiency.

In the stator core 131, the inner peripheral surface and an outer peripheral surface of the core back 134, that is, a core-back portion of each split stator core 1310 is a planar surface in the vicinity of the root of each teeth 135. This makes it possible to effectively use a winding space. By shortening a magnetic path, it is possible to reduce loss. It is possible to prevent winding collapse of the coils 133 while preventing disturbance in a magnetic distribution. The inner peripheral surface and the outer peripheral surface of the core back 134 are curved surfaces in the stator core 131 other than at the vicinity of the root of each teeth 135.

As described above, in the motor 10, the winding starting conducting wire 1361 of a coil 133 and the winding ending conducting wire 1362 of an adjacent coil 133 in the peripheral direction are connected to each other. The motor 10 is a brushless motor. A brushless motor is driven by electrical current divided into three phases in which supply timings differ. A voltage is applied to and electrical current is caused to flow at a location between two of three connection points where adjacent coils are connected to each other. By successively changing two connection points, the coils 133 and the magnets (not shown) of the rotor 12 attract or repel each other. This causes the rotor 12 to rotate.

The motor 10 is, for example, a high-speed rotation type motor rotatable at, for example, a rotation speed greater than or equal to 100,000 rotations per minute. Ordinarily, in order for the motor 10 to rotate at a high speed, it is advantageous for the motor 10 to have a smaller number of coils 133. The motor 10 is controlled by using the three-phase electrical current. Therefore, in the motor 10, the number of coils 133 and the number of teeth 135, where the coils 133 are disposed, are three each. That is, the motor 10 is a three-phase, three-slot motor.

The motor 10 includes holder portions 14 and terminals 15. The terminals 15 are examples of electronic components. The terminals 15 are electrically conductive. In the motor 10, the plurality of terminals 15 are each connected to the winding starting conducting wire 1361 of a coil 133 and the winding ending conducting wire 1362 of an adjacent coil 133. Each terminal 15 extends downward in the axial direction. The terminals 15 are disposed below the stator 13, that is, the stator core 131 in the axial direction. That is, the electronic components (the terminals 15) are disposed below the stator 13 in the axial direction. That is, the electronic components (the terminals 15) are connected to the coils 133, and protrude below the stator 13 in the axial direction. Therefore, by cooling the electronic components (the terminals 15) by an airflow S0 that flows in from motor housing inlets 320, it is possible to cool the coils 133 connected to the electronic components (the terminals 15).

The holder portions 14 are insulating box bodies. The terminals 15 are disposed in the corresponding holder portions 14. The holder portions 14 extend downward in the axial direction, and protrude below the lower motor housing 32 (described later) of the motor housing 30 in the axial direction. The terminals 15 disposed in the corresponding holder portions 14 protrude further below lower ends of the corresponding holder portions 14 in the axial direction. The terminals 15 are connected to the circuit board 50 disposed below the lower motor housing 32 in the axial direction. That is, the electronic components (the terminals 15) connect the coils 133 and the circuit board 50 to each other. This makes it possible to cool the electronic components (the terminals 15) by the airflow S0 that has flown in from the motor housing inlets 320, and to also cool the circuit board 50 that is connected to the electronic components (the terminals 15). The holder portions 14 and the insulator 132 may be an integrally molded body molded out of the same material. Alternatively, the holder portions 14 may be formed of a material differing from that of the insulator 132. That is, the insulator 132 is provided with the holder portions 14 that integrally protrude below the motor 10 in the axial direction. The electronic components (the terminals 15) are accommodated in the corresponding holder portions 14. Therefore, since the holder portions 14 are formed by an integrally molded component, it is possible to reduce assembling man-hours and reduce member costs.

The holder portions 14 hold the winding starting conducting wires 1361 and the winding ending conducting wires 1362. In each holder portion 14, the winding starting conducting wire 1361 and the winding ending conducting wire 1362, held by the holder portion 14, and the terminal 15 are connected to each other. The terminals 15, the winding starting conducting wires 1361, and the winding ending conducting wires 1362 may be electrically connected to each other by using a fastening member, such as a screw, or may be fixed to each other by a fixing method such as soldering. It is possible to, by using the terminals 15 and the holder portions 14 with the winding starting conducting wires 1361 and the winding ending conducting wires 1362 disposed therebetween, hold the winding starting conducting wires 1361 and the winding ending conducting wires 1362 by the corresponding holder portions 14 and electrically connect them to the terminals 15. In the embodiment, the holder portions 14 are an integrally molded body with the insulator 132.

As shown in Figs. 5 and 6, the holder portions 14 and the terminals 15 have portions that overlap the stator core 131 in the axial direction. Due to such an arrangement, it is possible to easily route the winding starting conducting wires 1361 and the wiring ending conducting wires 1362, so that work efficiency is improved. As shown in Figs. 5 and 6, when the motor 10 is viewed in the axial direction, the holder portions 14 and the terminals 15 are displaced in the peripheral direction from the joining portions 137 where split stator cores 1310 that are adjacent to each other in the peripheral direction are joined. The expression "the holder portions 14 are displaced in the peripheral direction from the joining portions 137" includes a case in which the holder portions 14 and the joining portions 137 exist at different positions in the peripheral direction on the same circumference (cylinder) having the central axis as the center, but is not limited thereto. For example, the expression may also include a case in which the holder portions 14 and the joining portions 137 are disposed on concentric circles having different diameters, and exist at different positions in the peripheral direction. The holder portions 14 and the terminals 15 are disposed between the teeth 135 and the joining portions 137 in the peripheral direction. Due to such an arrangement, since portions of the circuit board 50 that are connected to the terminals 15 are appropriately adjustable, the electronic components are provided on the circuit board 50 with greater freedom.

Here, the manufacturing of the stator 13 is described. For example, when the split stator cores 1310 are previously joined to each other in the peripheral direction and the ring-shaped stator core 131 is formed, work efficiency for winding the conducting wires around the teeth 135 protruding into the core back 134 is poor. Therefore, in the stator 13, prior to joining the split stator cores 1310, the insulator 132 is mounted on the teeth 135. At this time, the holder portions 14 of an integrally molded body with the insulator 132 are disposed at positions that overlap in the axial direction areas on one side of the split stator cores 1310 in the axial direction. At this time, the terminals 15 are provided in the holder portions 14.

On an outer side of the insulator 132, the conducting wires are wound around the teeth 135 protruding from the split stator cores 1310. The coils 133 are disposed for the corresponding split stator cores 1310. The split stator cores 1310 on which the coils 133 are mounted are joined at the joining portions 137 with the teeth 135 being disposed inwardly in the radial direction and side by side in the peripheral direction. At this time, since the holder portions 14 and the joining portions 137 are displaced from each other in the peripheral direction, when the joining is performed at the joining portions 137, the joining portions 137 are easily accessible by, for example, a tool or a jig, so that the joining at the joining portions 137 is facilitated. That is, it is possible to increase the work efficiency for joining the split stator cores 1310.

The stator core 131 where the split stator cores 1310 have been joined at the joining portions 137 has its curved portion brought into contact with an inner surface of the upper motor housing 31. At this time, the curved portion may be press-fitted to the inner surface of the upper motor housing 31. The press-fitting may be a so-called interference fitting, or light press-fitting (a so-called transition fit) whose press-fitting force is weaker than that in the interference fitting. The core back 134 may have a cylindrical shape without including a planar surface. In this case, a cylindrical outer surface is press-fitted to the upper motor housing 31. The core back 134 and the upper motor housing 31 may be secured to each other by using other methods such as an insertion-and-bonding method.

As described above, the motor 10 is, for example, a high-speed rotation type motor rotatable at a rotation speed greater than or equal to 100,000 rotations per minute. Therefore, in order to achieve a balanced rotation of the rotor 12, the teeth 135 are disposed at equal intervals in the peripheral direction. In the motor 10, the coils 133 are formed before joining the split stator cores 1310. As shown in Fig. 6, the split stator cores 1310 have the same shape. The teeth 135 protrude from the center of the split stator cores 1310 in the peripheral direction. When the split stator cores 1310 formed in this way are disposed side by side in the peripheral direction and joined at the joining portions 137, the teeth 135 are disposed at equal intervals in the peripheral direction.

The split stator cores 1310 have shapes that are in line symmetry with the teeth 135 interposed therebetween. Therefore, when the split stator cores 1310 are disposed side by side in the peripheral direction and joined to each other, the joining portions 137 are disposed at the center of adjacent teeth 135 in the peripheral direction. By virtue of such a structure, the distances in the peripheral direction of the joining portions 137 from the teeth 135 become equal to each other, and space that is usable for the joining operation can be wide. Therefore, it is possible to increase the work efficiency for joining the split stator cores 1310.

Since the lengths on both sides of the split stator cores 1310 in the peripheral direction with the teeth 135 interposed therebetween become equal to each other, it is possible suppress a reduction in the magnetic characteristics of the core back 134, that is, the stator core 131.

The motor housing 30 includes the upper motor housing 31 and the lower motor housing 32. That is, the motor housing 30 includes the upper motor housing 31 and the lower motor housing 32 disposed below the upper motor housing in the axial direction.

As shown in, for example, Figs. 3 and 4, the upper motor housing 31 includes the upper housing top plate portion 311 and an upper housing cylindrical portion 312. The upper housing top plate portion 311 extends in a direction orthogonal to the central axis C. The upper housing top plate portion 311 has a circular shape when viewed in the axial direction. The upper housing cylindrical portion 312 extends downward in the axial direction from an outer edge of the upper housing top plate portion 311 in the radial direction. The upper housing top plate portion 311 and the upper housing cylindrical portion 312 are an integrally molded body. The upper housing cylindrical portion 312 of the upper motor housing 31 is disposed on an outer side of a part of the shaft 11, the rotor 12, and the stator 13 in the radial direction. That is, at least a part of the motor housing 30 is disposed on the outer side of the motor 10 in the radial direction.

The motor housing 30 may be made of, for example, a metal or a resin. When the motor housing 30 is made of a metal, it is possible to increase the strength of the motor housing 30. In addition, it is possible to efficiently dissipate heat transmitted to the motor housing 30. Further, when the upper motor housing 31 is made of a metal, the metal of the upper motor housing 31 may be, for example, an aluminum alloy or a magnesium alloy. Aluminum alloy and magnesium alloy are easier to mold, are lighter, and are less expensive than other metals.

As shown in Fig. 3, a lower surface of the upper housing top plate portion 311 opposes the rotor 12 and the stator 13 of the motor 10 in the axial direction. The upper housing top plate portion 311 includes an upper bearing holding portion 313 and the upper axial hole 314. The upper bearing holding portion 313 includes a recessed portion whose upper side is recessed and that is disposed at a central portion of the lower surface of the upper housing top plate portion 311. The upper axial hole 314 extends in the axial direction. The outer ring of the upper bearing Br1 is secured to the upper bearing holding portion 313. The shaft 11 extends through the upper axial hole 314. A central axis of the upper bearing holding portion 313 and a central axis of the upper axial hole 314 coincide with each other.

The upper housing cylindrical portion 312 has a cylindrical shape. An upper end portion of the upper housing cylindrical portion 312 in the axial direction is connected to the upper housing top plate portion 311. The stator core 131 is press-fitted to an inner peripheral surface of the upper housing cylindrical portion 312. As described above, since the upper housing cylindrical portion 312 and the upper housing top plate portion 311 are an integrally molded body, heat transmitted from the stator core 131 to the upper housing cylindrical portion 312 is also transmitted to the upper housing top plate portion 311. Therefore, the heat of the stator 13 is efficiently discharged to the outside via the upper motor housing 31.

A plurality of stationary blades 33 are provided at an outer peripheral surface 300 of the upper housing cylindrical portion 312. The stationary blades 33 contact the upper housing cylindrical portion 312. That is, the plurality of stationary blades 33 are disposed closer to an outer side in the radial direction than an outer surface of the upper motor housing 31 in the radial direction, and closer to an inner side in the radial direction than an inner surface of the blower housing 40 (a lower cover 42) in the radial direction. The plurality of stationary blades 33 contact at least the outer surface of the upper motor housing 31 in the radial direction. The plurality of stationary blades 33 are disposed at equal intervals in the peripheral direction at the outer surface of the upper motor housing 31 in the radial direction.

When the stationary blades 33 and the upper motor housing 31 are said to contact each other, this may mean not only that different members contact each other but also that they are integrally molded with each other. In the embodiment, the stationary blades 33 are formed from the same member as the upper housing cylindrical portion 312. Although, in the embodiment, the stationary blades 33 and the upper housing cylindrical portion 312 are an integrated member, the stationary blades 33 may be formed from a member that differs from that from which the upper housing cylindrical portion 312 is formed. When the stationary blades 33 and the upper housing cylindrical portion 312 are formed from the same member, it is easier to assemble the blower A.

Each stationary blade 33 has a plate shape, and is inclined in a direction opposite to the direction of rotation of the impeller 20 as each stationary blade 33 extends upward. An impeller 20 side of each stationary blade 33 is curved in a convex shape. Outer edges of the plurality of stationary blades 33 contact the blower housing 40, that is, an inner surface of the lower cover 42. The stationary blades 33 are disposed in parallel in the peripheral direction, and guide the airflow S to the lower side when driving the blower A. The stationary blades 33 are disposed in the channel 60, and rectify the airflow S that flows in the channel 60.

The stationary blades 33 are disposed at equal intervals in the peripheral direction at the outer surface of the upper motor housing 31 in the radial direction. This makes it possible to bring the airflow S closer to a state in which the airflow S is symmetrical with respect to an axis at the outer surface of the upper motor housing 31 in the radial direction, and to bring the cooling characteristics of the upper motor housing 31 closer to a state in which the cooling characteristics are uniform in the peripheral direction.

When the motor 10 rotates, the coils 133 and portions in the vicinity thereof generate heat. This heat is transmitted to the upper motor housing 31. The stationary blades 33 that protrude outward are provided at the outer peripheral surface 300 of the upper motor housing 31, and are disposed in the channel 60. Therefore, the stationary blades 33 rectify the airflow S, and serve as heat-dissipating fins that allow the heat of the upper motor housing 31 to escape to the outside. This makes it possible to efficiently cool the upper motor housing 31 that has been made hot by the heat of the stator 13.

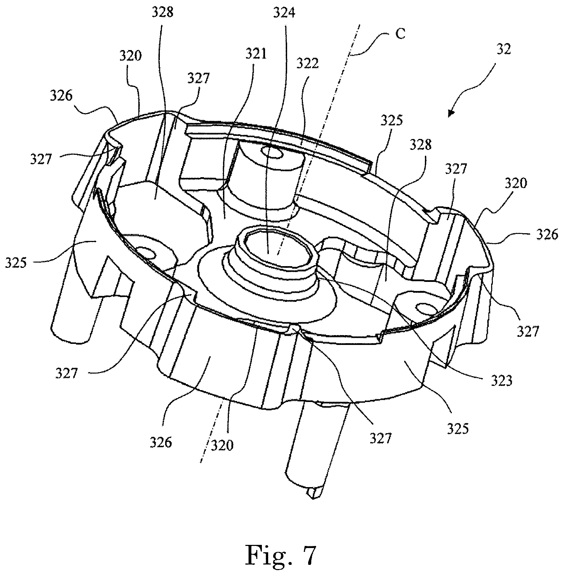

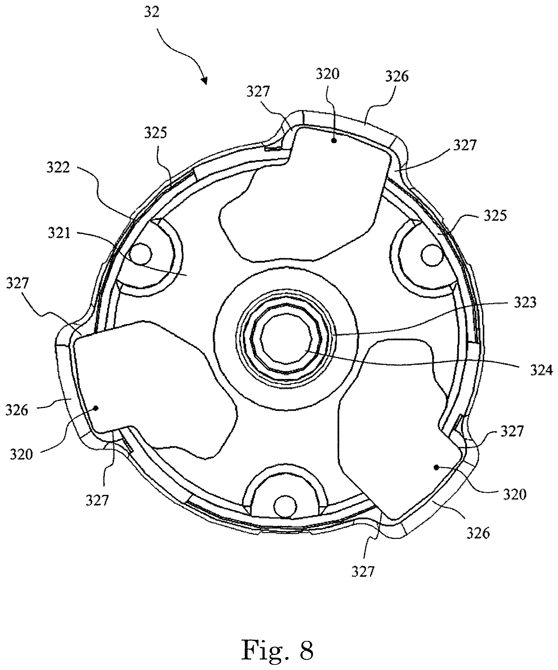

The lower motor housing 32 is provided below the upper motor housing 31 in the axial direction. Fig. 7 is a perspective view of the lower motor housing. Fig. 8 is a plan view of the lower motor housing.

The lower motor housing 32 includes a lower housing bottom portion 321 and a lower housing cylindrical portion 322. The lower housing bottom portion 321 has the shape of a plate that extends in a direction orthogonal to the central axis C. The lower housing cylindrical portion 322 is a cylindrical body that extends in the axial direction. The lower housing bottom portion 321 is integrally connected to a lower end portion of the lower housing cylindrical portion 322 in the axial direction.

The lower housing bottom portion 321 includes a lower bearing holding portion 323 and a lower axial hole 324. The lower bearing holding portion 323 protrudes upward in the radial direction from a central portion of the lower housing bottom portion 321, and includes a recessed portion where the central portion is recessed downward. The outer ring of the lower bearing Br2 is secured to the recessed portion of the lower bearing holding portion 323. The lower axial hole 324 is a through hole that extends in the axial direction through the central portion of the lower housing bottom portion 321. The shaft 11 extends through the lower axial hole 324. A central axis of the lower bearing holding portion 323 and a central axis of the lower axial hole 324 coincide with each other.

The lower motor housing 32 is mounted on the lower side of the upper motor housing 31. That is, an upper end portion of the lower housing cylindrical portion 322 in the axial direction contacts a lower end portion of the upper housing cylindrical portion 312 of the upper motor housing 31 in the axial direction. This causes at least a part of a lower surface of the upper motor housing 31 to be covered by the lower motor housing 32. The lower motor housing 32 is secured to the upper motor housing 31 by using a fastener, such as a screw. The upper motor housing 31 and the lower motor housing 32 may be made of the same material or different materials.

As shown in Figs. 7 and 8, the lower housing cylindrical portion 322 includes lower-housing small diameter portions 325, lower-housing large diameter portions 326, and lower-housing connection portions 327. Each lower-housing small diameter portion 325 has a cylindrical shape whose center of curvature coincides with the central axis C. Each lower-housing large diameter portion 326 has a cylindrical shape having a diameter that is larger than that of the lower-housing small diameter portion 325. Each lower-housing large diameter portion 326 has a cylindrical shape whose center of curvature coincides with the central axis C. That is, the lower-housing small diameter portions 325 and the lower-housing large diameter portions 326 have curved surfaces having the same center of curvature.

The lower housing cylindrical portion 322 includes three lower-housing small diameter portions 325 and three lower-housing large diameter portions 326. The lower-housing small diameter portions 325 and the lower-housing large diameter portions 326 are alternately disposed in the peripheral direction. The lower-housing small diameter portions 325 and the lower-housing large diameter portions 326 that are adjacent to each other in the peripheral direction are connected to each other at the corresponding lower-housing connection portions 327.

The lower housing bottom portion 321 includes terminal through holes 328 extending therethrough in the axial direction. Each terminal through hole 328 includes a portion on an inner side in the radial direction of the lower-housing large diameter portions 326 and the lower-housing connection portions 327. The holder portions 14 and the terminals 15 are disposed on the inner side in the radial direction of the lower-housing large diameter portions 326 and the lower-housing connection portions 327. The holder portions 14 and the terminals 15 extend through the terminal through holes 328 and protrude below the lower motor housing 32 in the axial direction.

Portions closer to the inner side in the radial direction than the lower-housing large diameter portions 326 and the lower-housing connection portions 327 have through holes in the axial direction, and are the motor housing inlets 320. That is, when viewed in the axial direction, the motor housing inlets 320 include regions that overlap the electronic components (the terminals 15) in the radial direction (Claim 6). Therefore, the airflow S0 that has flown in from the motor housing inlets 320 directly strikes the electronic components (the terminals 15). Consequently, it is possible to efficiently cool the electronic components (the terminals 15).

The motor housing inlets 320 allow an inner side and an outer side of the lower motor housing 32 in the radial direction to communicate with each other. The lower motor housing 32 is not provided with stationary blades 33 at its outer surface in the radial direction, and has a structure that is simpler than that of the upper motor housing 31. When the motor housing inlets 320 are formed in the lower motor housing 32 having a simple structure, it is possible to easily form the motor housing inlets 320.

Each motor housing inlet 320 has a cylindrical shape extending in the axial direction. The motor housing inlets 320 extend below a lower end of the blower housing 40 in the axial direction and surrounds outer sides of the electronic components (the terminals 15) in the radial direction. The motor housing inlets 320 are formed below the lower end of the blower housing 40 in the axial direction, and allow the inner side and the outer side of the motor housing 30 in the radial direction to communicate with each other. Since this makes it possible for a part of the airflow S to be guided into the lower motor housing 32, it is possible to cool the electronic components (the terminals 15). Therefore, it is possible to suppress a rise in the temperatures of the electronic components (the terminals 15). That is, the lower motor housing 32 surrounds the outer sides of the electronic components (the terminals 15) in the radial direction. The motor housing inlets 320 are provided in the lower motor housing 32. Therefore, the motor housing inlets 320 can be provided in the lower motor housing 32 having a simple structure. In addition, the motor housing inlets 320 can be formed without performing a complicated assembling operation.

The lower motor housing 32 includes the lower-housing small diameter portions 325, the lower-housing large diameter portions 326 whose diameters are larger than those of the lower-housing small diameter portions 325, and the lower-housing connection portions 327 that connect the lower-housing large diameter portions 326 and the corresponding lower-housing small diameter portions 325 to each other. An upper end portion of each lower-housing large diameter portion 326 is disposed on an outer side of the upper motor housing 31 in the radial direction and on an inner side of the blower housing 40 in the radial direction. The motor housing inlets 320 are formed by the upper end portions of the lower-housing large diameter portions 326 in the axial direction and upper end portions of the lower-housing connection portions 327 in the axial direction. This makes it possible to form the motor housing inlets 320 by using a simple structure. In addition, it is possible to form the motor housing inlets 320 without performing a complicated assembling operation.

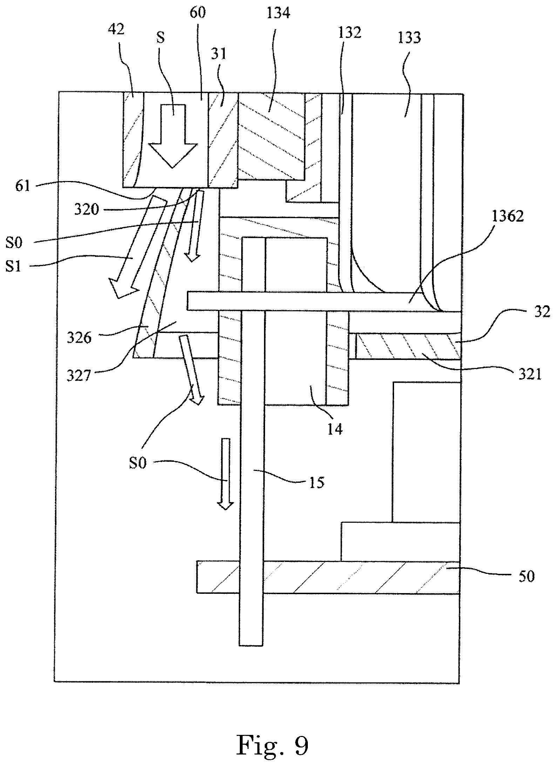

Next, the securing of the lower motor housing 32 to the upper motor housing 31 is described. Fig. 9 is an enlarged sectional view of a motor housing inlet. When the upper motor housing 31 and the lower motor housing 32 are secured to each other, the upper bearing Br1 that rotatably supports the upper side of the shaft 11 is held by the upper bearing holding portion 313, and the lower bearing Br2 that rotatably supports the lower side of the shaft 11 is held by the lower bearing holding portion 323. Therefore, the shaft 11 and the rotor 12 secured to the shaft 11 are rotatably supported by the motor housing 30 via the upper bearing Br1 and the lower bearing Br2. Although the upper motor housing 31 and the lower motor housing 32 may be secured to each other by, for example, using a screw, the method of securing them is not limited thereto. Other methods that allow the upper motor housing 31 and the lower motor housing 32 to be firmly secured to each other, such as bonding and securing using friction, may also be used.

The outside diameter of an outer surface of each lower-housing small diameter portion in the radial direction is the same or substantially the same as that of an outer surface of the upper housing cylindrical portion 312 in the radial direction. When an upper end of the lower motor housing 32 in the axial direction is secured to a lower end of the upper motor housing 31 in the axial direction, the lower-housing small diameter portions 325 overlap the upper housing cylindrical portion 312. That is, the outer surface of the upper housing cylindrical portion 312 and the outer surfaces of the lower-housing small diameter portions 325 form smooth or substantially smooth curved surfaces. The upper end portions of the lower-housing large diameter portions 326 are disposed closer to the outer side in the radial direction than the upper housing cylindrical portion 312 and are disposed on the inner side of the lower cover 42 of the blower housing 40 in the radial direction (see Figs. 3 and 9). That is, the lower motor housing 32 is disposed below the lower end of the blower housing 40 in the axial direction.

When viewed in the axial direction, in a portion of the lower motor housing 32 including the lower-housing large diameter portions 326, the lower-housing large diameter portions 326 and the lower-housing connection portions 327 are disposed in a gap between the motor housing 30 and the blower housing 40 in the radial direction. A portion surrounded by upper ends of the lower-housing large diameter portions 326 and upper ends of the lower-housing connection portions 327 in the axial direction and by the lower end portion of the upper housing cylindrical portion 312 allows an inner side and an outer side of the lower motor housing 32 to communicate with each other. That is, an inner side in a radial direction of a portion surrounded by the lower-housing large diameter portions 326 and the lower-housing connection portions 327 corresponds to the motor housing inlets 320.

At a portion where the channel 60 overlaps the lower-housing small diameter portions 325 in the axial direction, a part of the airflow S is blown out to the outside as a blowout airflow S1; and at a portion of the channel 60 that overlaps the lower-housing large diameter portions 326 in the axial direction, a part of the airflow S flows as the inflow airflow S0 into the motor housing 30 from the motor housing inlets 320. As shown in Figs. 7 and 8, three lower-housing large diameter portions 326 are provided in the peripheral direction. The number of motor housing inlets 320 is three. Therefore, it is possible to increase the amount of inflow airflow S0 that flows in from the motor housing inlets 320 and to efficiently cool the electronic components. The motor housing inlets 320 are disposed at equal intervals in the peripheral direction. Therefore, the inflow airflow S0 flows in in a balanced manner from the motor housing inlets 320, so that pressure imbalance in the lower motor housing 32 does not easily occur, and turbulence does not easily occur.

That is, the motor housing 30 includes a plurality of motor housing inlets 320. This makes it possible to increase the flow quantity of the airflow S0 that flows into the motor housing 30, and to efficiently cool the electronic components (the terminals 15). The motor housing inlets 320 are disposed at equal intervals in the peripheral direction. By this, since the pressure balance in the motor housing 30 approaches a uniform state in the peripheral direction, it is possible to suppress turbulence in the inside of the motor housing 30.

Although in the embodiment, the motor housing 30 is divisible into the upper motor housing 31 and the lower motor housing 32, they may be integrally formed. In this case, the lower side of the motor housing 30 in the axial direction is open, or may be provided with a member that covers the opening.

Next, the impeller 20 is described. The impeller 20 is a so-called diagonal-flow impeller, and includes a hub portion 21 and a plurality of blades 22. The impeller 20 is made of a resin called engineering plastic. Engineering plastic is a resin having mechanical characteristics, such as strength and heat resistance, that are better than those of other resins. The impeller 20 may be made of, for example, a metal. The diameter of the hub portion 21 increases towards the lower side. In other words, the impeller 20 includes the hub portion 21 whose diameter increases towards the lower side. That is, the diameter of the hub portion 21 gradually increases towards the lower side.

The hub portion 21 includes a lower recessed portion 211 and a boss portion 212. A hole portion 213 to which the shaft 11 of the motor 10 is press-fitted is provided at the center of the boss portion 212 (on the central axis C). Therefore, the boss portion 212 and the shaft 11 are connected to each other, and the impeller 20 rotates around the central axis C as a center. That is, the impeller 20 is rotatable around the central axis extending vertically. That is, when the impeller 20 is secured to the shaft 11 and the motor 10 is driven, the impeller 20 rotates together with the shaft 11. When the impeller 20 rotates, the airflow S is generated. That is, the motor 10 together with the rotor 12 rotates the impeller 20.

The plurality of blades 22 are provided in parallel in the peripheral direction on an outer surface 214 of the hub portion 21. In the embodiment, the blades 22 are provided in parallel on the outer surface 214 of the hub portion 21 at determined intervals in the peripheral direction, and are integrally molded with the hub portion 21. An upper portion of each blade 22 is disposed forwardly of its lower portion in a rotation direction. That is, each blade 22 is inclined with respect to the central axis C.

Since the lower recessed portion 211 of the hub portion 21 of the impeller 20 is provided, it is possible to reduce the weight of the hub portion 21. When the impeller 20, which is a rotating portion, is lighter, it is possible to reduce power consumption, and to facilitate high-speed rotation. In addition, it is possible to suppress the occurrence of sink marks when the impeller 20 is being molded. Since a gap between a lower surface of the hub portion 21 in the axial direction and an upper surface of the motor housing 30 is narrow, the airflow S generated by the impeller 20 does not easily flow into a portion between the hub portion 21 and the motor housing 30. Therefore, it is possible to suppress a reduction in blowing efficiency.

Next, the blower housing 40 is described. The blower housing 40 surrounds an outer side of the upper motor housing 31 in the radial direction with a gap therebetween. The blower housing 40 includes the impeller cover 41 and the lower cover 42.

The impeller cover 41 is disposed on at least an outer side of the impeller 20 in the radial direction. That is, the blower housing 40 is disposed on the outer side of the impeller 20 in the radial direction. The impeller cover 41 is a guide that directs the airflow S generated by the rotation of the impeller 20 in the axial direction. The impeller cover 41 includes the intake opening 43 that opens vertically (axial direction). The intake opening 43 has a bell mouth 431 bent inwardly and extending downward from an upper end thereof. This causes the diameter of the intake opening 43 to be smoothly reduced from the upper side towards the lower side. When, in the impeller cover 41, the intake opening 43 has the bell mouth 431, it is possible to smoothly suck in air. This increases the amount of air that is sucked in from the intake opening 43 when the impeller 20 rotates. Therefore, it is possible to increase the blowing efficiency of the blower A.

In the blower A of the embodiment, the impeller cover 41 is secured to the lower cover 42. In an exemplary securing method, for example, a protrusion may be provided on an outer surface of the lower cover 42 and the impeller cover 41 may be provided with a beam portion extending downward in the axial direction and having a recessed portion that is disposed in a front-end-side inner surface and that is recessed outward in the radial direction. When the impeller cover 41 is moved in the axial direction towards the lower cover 42, the beam portion is flexed and the protrusion of the lower cover 42 is inserted into the recessed portion of the beam portion of the impeller cover 41 to secure the impeller cover 41 to the lower cover 42. The securing method is not limited to this method. It is possible to widely use securing methods that make it possible to suppress movement in the axial direction and the radial direction. Desirably, they can be positioned in the peripheral direction and can be easily attached and detached.

The lower cover 42 is a cylindrical cover having a circular shape in cross section and extending in the axial direction. The lower cover 42 is disposed on the outer side of the upper motor housing 31 in the radial direction. That is, the blower housing 40 faces the outer surface of the motor housing 30 in the radial direction with a gap therebetween. In the embodiment, the blower housing 40 (the lower cover 42) is disposed apart from the outer side of the upper motor housing 31 in the radial direction with a gap therebetween. The plurality of stationary blades 33 are disposed side by side at equal intervals in the peripheral direction in the gap between the lower cover 42 and the upper motor housing 31.

The lower cover 42 includes openings in an upper end portion and a lower end portion thereof. The upper end portion of the lower cover 42 is connected to a lower end portion of the impeller cover 41. The lower end portion of the impeller cover 41 is inserted into the lower cover 42. An inner surface of the impeller cover 41 is smoothly, for example, differentiably continuous with the inner surface of the lower cover 42. Therefore, any disturbance in the airflow S is suppressed by making smooth the inner surface of the blower housing 40.

Although the upper motor housing 31 and the lower cover 42 may be an integrated molded body, the upper motor housing 31 and the lower cover 42 are not limited thereto. For example, the upper motor housing 31 and the lower cover 42 may be formed as separate members. When the lower cover 42 is formed separately from the upper motor housing 31, the impeller cover 41 and the lower cover 42 may be integrated with each other.

As shown in Figs. 3 and 4, the circuit board 50 is disposed below the motor housing 30 in the axial direction. Circuits for driving the motor 10, such as a power supply circuit and a control circuit, are formed at the circuit board 50.

The circuit board 50 is disposed below the lower motor housing 32 in the axial direction. That is, the electronic components are disposed below the stator 13 in the axial direction. As shown in Fig. 6, the circuit board 50 includes a printed circuit made by a metallic film. Electronic components that form, for example, a power supply circuit or a control circuit, are provided on the printed circuit. That is, the electronic components are disposed below the stator 13 in the axial direction.

Examples of the electronic components that are mounted on the circuit board 50 may include field effect transistors (FETs 51) and electrolytic capacitors 52. Electronic components other than the FETs 51 and the electrolytic capacitors 52 are also provided in the printed circuit. Although the FETs 51 are used as transistors, the transistors are not limited thereto, so that, for example, bipolar transistors, IGBTs, or MOSFETs may also be used. Although the electrolytic capacitors 52 are used as capacitors, the capacitors are not limited thereto, so that, for example, ceramic capacitors or film capacitors may also be used.

As shown in Fig. 3, the electronic components, such as the FETs 51 and the electrolytic capacitors 52, are disposed on an upper surface of the circuit board 50 in the axial direction.

The blower A has the above-described structure. Next, the operation of the blower A is described. When electrical current is supplied to the coils 133 via the terminals 15, the motor 10 is driven. When the motor 10 is driven, the shaft 11 rotates, and the impeller 20 secured to the shaft 11 rotates. When the impeller 20 rotates, the airflow S is generated (see Fig. 3).

The airflow S generated by the rotation of the impeller 20 flows into the channel 60. The airflow S that has flown into the channel 60 is rectified by the stationary blades 33. The stationary blades 33 cause the airflow S to flow in a state closer to a state in which the airflow S is symmetrical with respect to an axis with the central axis C as the center. Then, the airflow S is blown out to the outside of the blower A from the exhaust portion 61.

As shown in Figs. 3 and 9, the upper end portion of the lower housing cylindrical portion 322, that is, the motor housing inlets 320 are disposed below the exhaust portion 61 in the axial direction. Therefore, the airflow S that is blown out from the exhaust portion 61 branches into the blowout airflow S1 that is blown out to the outside of the blower A and the inflow airflow S0 that flows into the lower motor housing 32 from the motor housing inlets 320.

The holder portions 14 and the terminals 15 are disposed closer to the inner side in the radial direction than an inner surface of each lower-housing large diameter portion 326 in the radial direction and an inner surface of each lower-housing connection portion 327 in the radial direction. Therefore, the inflow airflow S0 that has flown in from the motor housing inlets 320 flows along the holder portions 14 and the terminals 15. As described above, the terminals 15 are made of a metal and have the form of a flat plate, so that the contact area of each terminal 15 with the inflow airflow S0 is large. The terminals 15 contact the winding starting conducting wires 1361 and the winding ending conducting wires 1362 of the coils 133, each of which is a heat source of the motor 10. Therefore, heat generated by the coils 133 is transmitted to the terminals 15 via the winding starting conducting wires 1361 and the winding ending conducting wires 1362. The heat transmitted to the terminals 15 is taken away by the inflow airflow S0. That is, the heat generated by the coils 133 as a result of driving the motor 10 is transmitted to the terminals 15 via the winding starting conducting wires 1361 and the winding ending conducting wires 1362, and is discharged to the outside by the inflow airflow S0. Therefore, in the motor 10, it is possible to effectively discharge the heat generated by the coils 133 to the outside. This makes it possible to suppress a temperature rise of the motor 10 and to stably operate the motor 10.

The circuit board 50 is disposed below the lower motor housing 32 in the axial direction. Lower ends of the terminals 15 in the axial direction are connected to the circuit board 50. Therefore, the inflow airflow S0 that has flown in from the motor housing inlets 320 flows along the terminals 15, and a part thereof flows along the circuit board 50. Therefore, the inflow airflow S0 is blown against the electronic components (here, for example, the FETs 51 and the electrolytic capacitors 52) provided on the circuit board 50. Therefore, the inflow airflow S0 takes away the heat from, that is, cools the electronic components (here, for example, the FETs 51 and the electrolytic capacitors) provided on the circuit board 50. This makes it possible to suppress a temperature rise of the circuits on the circuit board 50 and to stably operate the blower A.

The inflow airflow S0 is also blown against a wiring pattern that is formed on the circuit board 50, and the wiring pattern is also cooled. Since the electronic components are provided in the wiring pattern, cooling the wiring pattern also indirectly cools the electronic components. For example, when the circuit board 50 is a double-sided circuit board, cooling the wiring pattern on the upper surface by using the inflow airflow S0 also indirectly cools the electronic components provided on the lower surface.

The vacuum cleaner 100 includes the blower A. In the vacuum cleaner 100 having the above-described structure, when the motor 10 of the blower A is driven, the impeller 20 rotates around the central axis C as the center in the direction of rotation. Therefore, air containing dirt, such as dust on the floor F, circulates through the suction nozzle 110, the suction tube 107, the intake portion 103 (all of which are shown in Fig. 1), the dust collecting portion, and the filter in this order. Air that has passed through the filter is taken into the blower housing 40 via the intake opening 43 of the blower A. At this time, the amount of air that is sucked in from the intake opening 43 is increased by the bell mouth 431, and the air is smoothly guided to locations between adjacent blades 22. Therefore, it is possible to increase the blowing efficiency of the blower A. The vacuum cleaner 100 includes the blower A. Consequently, it is possible to realize a vacuum cleaner including the blower A that can cool the motor 10 and the electronic components (the terminals 15) for driving the motor 10 without reducing the blowing efficiency.

The air that has been taken into the impeller cover 41 circulates between adjacent blades 22, and is accelerated downward and further outward in the radial direction than the rotating impeller 20. The air accelerated downward on the outer side in the radial direction is blown out further downward than the impeller 20. The air (airflow S) blown out further downward than the impeller 20 flows into the channel 60 in the gap between the upper motor housing 31 and the lower cover 42. The air (airflow S) that has flown into the channel 60 circulates between adjacent stationary blades 33 in the peripheral direction.

The airflow S that has passed the lower ends of the stationary blades 33 is exhausted to the outside of the blower housing 40 via the exhaust portion 61. The airflow S exhausted to the outside of the blower housing 40 circulates in the air path in the inside of the casing 102 of the vacuum cleaner 100, and is exhausted to the outside of the casing 102 from the exhaust portion 104 (see Fig. 1). This allows the vacuum cleaner 100 to clean the floor F.

In the motor 10, when electrical current is supplied to the coils 133, the coils 133 and the stator core 131 generate heat. The airflow S generated at the impeller 20 flows to an outer surface of the upper housing cylindrical portion 312. The plurality of stationary blades 33 formed integrally with the outer surface of the upper housing cylindrical portion 312 are provided in the channel 60 where the airflow S flows. Therefore, the surface area that the airflow S contacts is increased, and heat-dissipating efficiency is increased. This makes it possible to reduce the temperature of the motor 10 and to suppress a reduction in the efficiency of the motor 10.

When the inflow airflow S0 that has flown in from the motor housing inlets 320 cools the terminals 15, the coils 133 that are connected to the terminals 15 via the winding starting conducting wires 1361 and the winding ending conducting wires 1362 are also cooled. This also makes it possible to suppress a reduction in the efficiency of the motor 10. Therefore, it is possible to suppress a reduction in the blowing efficiency of the blower A.

By efficiently cooling the circuit board 50, where circuits for driving the motor 10 are formed, and the electronic components, here, the FETs 51 and the electrolytic capacitors 52, provided on the circuit board 50, it is possible to stabilize the operation of the circuits. Therefore, it is possible to stabilize the operation of the blower A and, thus, to stabilize the operation of the vacuum cleaner 100.

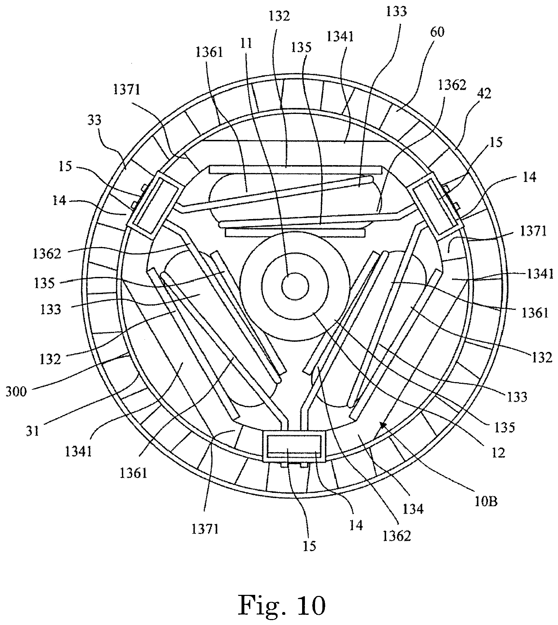

A motor according to another embodiment of the present invention is described with reference to the drawings. Fig. 10 is a bottom view of a motor 10B and an upper motor housing 31 according to another embodiment of the present invention. The motor 10B shown in Fig. 10 differs from the motor 10 in the shape of split stator cores 1341 and the positions of holder portions 14. The other features are the same as those of the motor 10 according to the previous embodiment. Portions that are substantially the same as those of the motor 10 are given the same reference numerals, and such portions are not described in detail.

As shown in Fig. 10, the split stator cores 1341 of the motor 10B are asymmetrical in the peripheral direction with the teeth 135 interposed therebetween. Therefore, joining portions 1371 where split stator cores 1341 that are adjacent to each other in the peripheral direction are joined to each other are displaced towards one side from the center of adjacent teeth 135 in the peripheral direction (in a clockwise direction in Fig. 10). The holder portions 14 and the terminals 15 are positioned at the center in the peripheral direction of teeth 135 that are adjacent to each other.

Due to such an arrangement, the distances of the holder portions 14 and the terminals 15 from adjacent teeth 135 and coils 133 in the peripheral direction become equal to each other. Therefore, it becomes easy to wire the holder portions 14 and the terminals 15 from winding starting conducting wires 1361 from the coils 133 and from winding ending conducting wires 1362 from the coils 133 adjacent thereto. Since the joining portions 1371, the holder portions 14, and the terminals 15 are disposed at different positions in the peripheral direction, it is possible to easily join the split stator cores 1341 at the joining portions 1371 and to improve work efficiency.

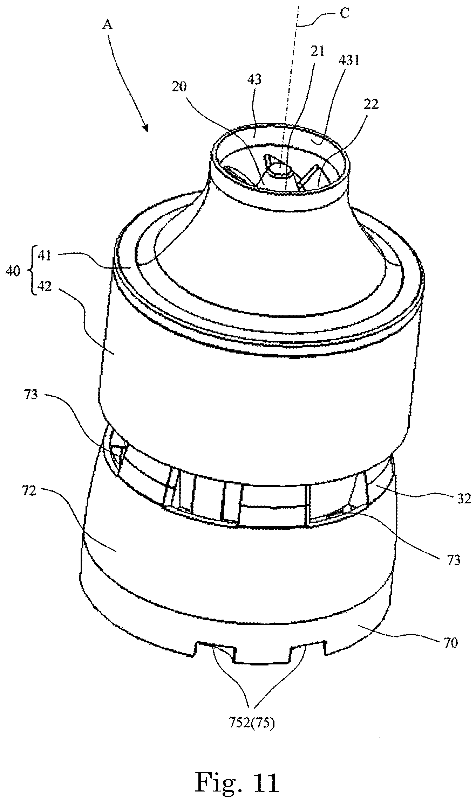

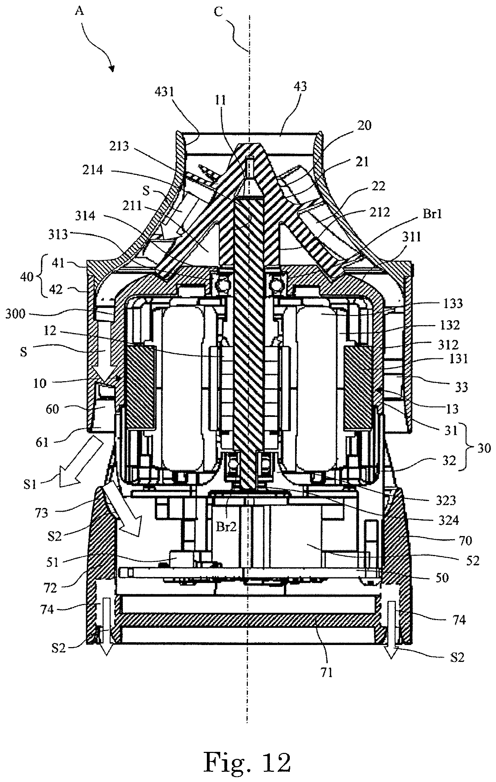

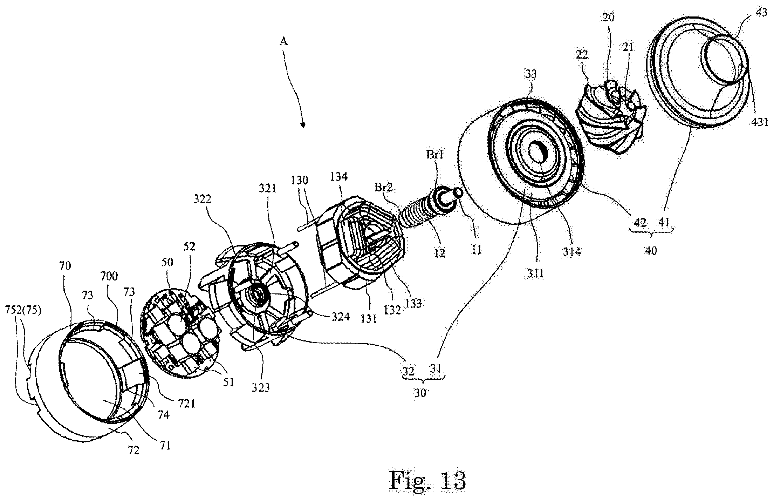

A blower A1 according to another embodiment of the present invention is described with reference to the drawings. Fig. 11 is a perspective view of the blower A1 according to another embodiment. Fig. 12 is a vertical sectional view of the blower A1 shown in Fig. 11. Fig. 13 is an exploded perspective view of the blower A1 shown in Fig. 11.

The blower A1 includes a motor 10, an impeller 20, a motor housing 30, a blower housing 40, a circuit board 50, and a circuit-board case 70. In the blower A1, the impeller 20 and the motor housing 30 are accommodated in the blower housing 40. In the embodiment, the blower housing 40 accommodates the upper side of the motor housing 30. As shown in Fig. 13, a channel 60 is formed in a gap between the blower housing 40 and the upper motor housing 31 (described later) of the motor housing 30. An upper end (upstream end) of the channel 60 is connected to the impeller cover 41 (described below). An exhaust portion 61 is formed at a lower end (downstream end) of the channel 60.

The motor 10 is accommodated in the motor housing 30. The impeller 20 rotates around a central axis C extending vertically. The motor 10 is disposed below the impeller 20, and rotates the impeller 20. The rotation of the motor 10 causes the impeller 20 to rotate around the central axis C, so that an airflow S is generated. The airflow S that is generated by the rotation of the impeller 20 is discharged from the exhaust portion 61 via the channel 60. As shown in Fig. 12, the motor 10 accommodated in the motor housing 30 is disposed below the impeller 20. In the description below, airflow that flows through the channel 60 is also called the airflow S.

The motor 10 is a so-called inner-rotor-type motor. The motor 10 includes a shaft 11, a rotor 12, and a stator 13.

The shaft 11 has a circular columnar shape. The shaft 11 is disposed along the central axis C. As shown in Fig. 12, the shaft 11 extends through an upper axial hole 314 in an upper housing top plate portion 311 (described later) of the upper motor housing 31. The impeller 20 is secured to an end portion of the shaft 11 that protrudes from the upper housing top plate portion 311. The shaft 11 is rotatably supported by an upper bearing Br1 and a lower bearing Br2.

The upper bearing Br1 and the lower bearing Br2 are ball bearings. The shaft 11 is secured to an inner ring of the upper bearing Br1 and an inner ring of the lower bearing Br2. Examples of securing methods that are used include a bonding-and-insertion method and a press-fitting method. An outer ring of the upper bearing Br1 is secured to the upper motor housing 31, and an outer ring of the lower bearing Br2 is secured to a lower motor housing 32. The upper bearing Br1 and the lower bearing Br2 are not limited to ball bearings.

The rotor 12 is secured to the shaft 11. The rotor 12 rotates together with the shaft 11. That is, the rotor 12 is secured to the shaft 11, and rotates together with the shaft 11. The rotor 12 includes a plurality of magnets (not shown). The plurality of magnets are secured to an outer peripheral surface of the shaft 11. The plurality of magnets are such that N-pole magnetic pole surfaces and S-pole magnetic pole surfaces are alternately arranged.

Instead of the plurality of magnets, a single ring-shaped magnet may be used. In this case, the magnet may be alternately magnetized at an N pole and an S pole in the peripheral direction. The magnet may be integrally molded out of resin mixed with magnetic powder.

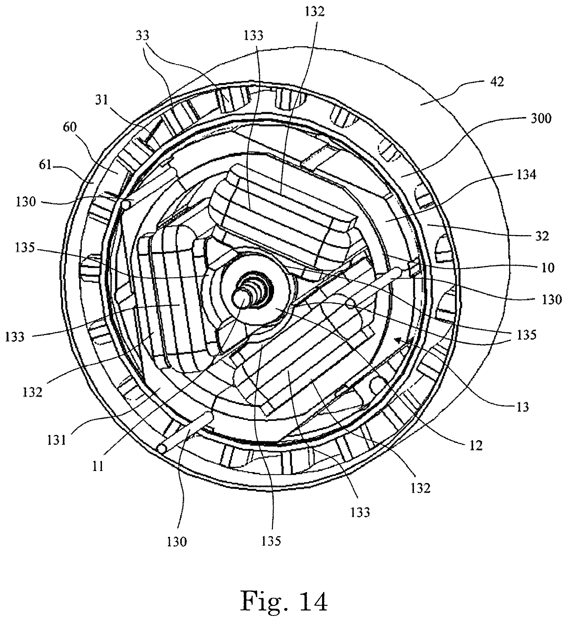

Fig. 14 is a perspective view of the motor and the upper motor housing as viewed from therebelow. The stator 13 is disposed on an outer side of the rotor 12 in the radial direction. That is, the stator 13 opposes the rotor 12 in the radial direction. More specifically, the rotor 12 is disposed on an inner side of the stator 13 in the radial direction. As described above, the motor 10 is an inner-rotor-type motor. The stator 13 includes a stator core 131, an insulator 132, and the coils 133. That is, the stator 13 includes the coils 133. The stator core 131 is a laminated body formed from electromagnetic steel plates that are laminated in the axial direction (the vertical direction in Fig. 12). The stator core 131 is not limited to a laminated body formed from electromagnetic steel plates that are laminated, and may be, for example, a single member formed by, for example, casting or firing powder.

The stator core 131 includes a ring-shaped core back 134 and a plurality of teeth 135. The plurality of teeth 135 are formed radially so as to extend inwardly in the radial direction from an inner peripheral surface of the core back 134 towards the magnets (not shown) of the rotor 12. Therefore, the plurality of teeth 135 are disposed in the peripheral direction. The coils 133 are formed by winding conducting wires around the teeth 135 via the insulator 132.

The motor 10 is a brushless motor. A brushless motor is driven by electrical current divided into three phases in which supply timings differ. By supplying electrical current to the plurality of coils 133 at a specified timing, the coils 133 and the magnets of the rotor 12 attract or repel each other to rotate the rotor 12. The motor 10 is, for example, a high-speed rotation type motor rotatable at, for example, a rotation speed greater than or equal to 100,000 rotations per minute. Ordinarily, in order for the motor 10 to rotate at a high speed, it is advantageous for the motor 10 to have a smaller number of coils 133. The motor 10 is controlled by using the three-phase electrical current. Therefore, in the motor 10, the number of coils 133 and the number of teeth 135, where the coils 133 are disposed, are three each. That is, the motor 10 is a three-phase, three-slot motor. In order to achieve a balanced rotation, the three teeth 135 are disposed at equal intervals in the peripheral direction.

In the stator core 131, the inner peripheral surface and an outer peripheral surface of the core back 134 are planar surfaces in the vicinity of the root of each teeth 135. This makes it possible to effectively use a winding space. By shortening a magnetic path, it is possible to reduce loss. It is possible to prevent winding collapse of the coils 133 while preventing disturbance in a magnetic distribution. The inner peripheral surface and the outer peripheral surface of the core back 134 other than at the vicinity of the root of each teeth 135 are curved surfaces. The curved portion of the core back 134 contacts an inner surface of the upper motor housing 31. Here, the curved portion may be press-fitted to the inner surface of the upper motor housing 31. The press-fitting may be a so-called interference fitting, or light press-fitting (a so-called transition fit) whose press-fitting force is weaker than that in the interference fitting. The core back 134 may have a cylindrical shape without including a planar surface. In this case, a cylindrical outer surface is press-fitted to the upper motor housing 31. The core back 134 and the upper motor housing 31 may be secured to each other by using, for example, an insertion-and-bonding method.

The conducting wires of adjacent coils 133 are connected to each other. Lead wires 130 are connected to the connected conducting wires. That is, in the motor 10, three coils 133 are connected to each other by delta connection. The lead wires 130 are connected to a driving circuit, that is, a printed circuit on the circuit board 50 disposed below the blower housing 40. Electric power is supplied to the coils 133 via the lead wires 130. As shown in Fig. 5, there are three terminals.

The motor housing 30 includes the upper motor housing 31 and the lower motor housing 32.

As shown in, for example, Figs. 12 and 13, the upper motor housing 31 includes the upper housing top plate portion 311 and an upper housing cylindrical portion 312. The upper housing top plate portion 311 extends in a direction orthogonal to the central axis C. The upper housing top plate portion 311 has a circular shape when viewed in the axial direction. The upper housing cylindrical portion 312 extends downward in the axial direction from an outer edge of the upper housing top plate portion 311 in the radial direction. The upper housing top plate portion 311 and the upper housing cylindrical portion 312 are an integrally molded body. The upper housing cylindrical portion 312 of the upper motor housing 31 is disposed on an outer side of a part of the shaft 11, the rotor 12, and the stator 13 in the radial direction.

The motor housing 30 may be made of, for example, a metal or a resin. When the motor housing 30 is made of a metal, it is possible to increase the strength of the motor housing 30. In addition, it is possible to efficiently dissipate heat transmitted to the motor housing 30. Further, when the upper motor housing 31 is made of a metal, the metal of the upper motor housing 31 may be, for example, an aluminum alloy or a magnesium alloy. Aluminum alloy and magnesium alloy are easier to mold, are lighter, and are less expensive than other metals.

As shown in Fig. 12, a lower surface of the upper housing top plate portion 311 opposes the rotor 12 and the stator 13 of the motor 10 in the axial direction. The upper housing top plate portion 311 includes an upper bearing holding portion 313 and the upper axial hole 314. The upper bearing holding portion 313 includes a recessed portion whose upper side is recessed and that is disposed at a central portion of the lower surface of the upper housing top plate portion 311. The upper axial hole 314 extends in the axial direction. The outer ring of the upper bearing Br1 is secured to the upper bearing holding portion 313. The shaft 11 extends through the upper axial hole 314. A central axis of the upper bearing holding portion 313 and a central axis of the upper axial hole 314 coincide with each other.

The upper housing cylindrical portion 312 has a cylindrical shape. An upper end portion of the upper housing cylindrical portion 312 in the axial direction is connected to the upper housing top plate portion 311. The stator core 131 is press-fitted to an inner peripheral surface of the upper housing cylindrical portion 312. As described above, since the upper housing cylindrical portion 312 and the upper housing top plate portion 311 are an integrally molded body, heat transmitted from the stator core 131 to the upper housing cylindrical portion 312 is also transmitted to the upper housing top plate portion 311. Therefore, the heat of the stator 13 is efficiently discharged to the outside via the upper motor housing 31.

A plurality of stationary blades 33 are provided at an outer peripheral surface 310 of the upper housing cylindrical portion 312. The stationary blades 33 contact the upper housing cylindrical portion 312. That is, the plurality of stationary blades 33 are disposed closer to an outer side in the radial direction than an outer surface of the upper motor housing 31 in the radial direction, and closer to an inner side in the radial direction than an inner surface of the blower housing 40 (a lower cover 42) in the radial direction. The plurality of stationary blades 33 contact at least the outer surface of the upper motor housing 31 in the radial direction. The plurality of stationary blades 33 are disposed at equal intervals in the peripheral direction at the outer surface of the upper motor housing 31 in the radial direction.

When the stationary blades 33 and the upper motor housing 31 are said to contact each other, this may mean not only that different members contact each other but also that they are integrally molded with each other. In the embodiment, the stationary blades 33 are formed from the same member as the upper housing cylindrical portion 312. Although, in the embodiment, the stationary blades 33 and the upper housing cylindrical portion 312 are an integrated member, the stationary blades 33 may be formed from a member that differs from that from which the upper housing cylindrical portion 312 is formed. When the stationary blades 33 and the upper housing cylindrical portion 312 are formed from the same member, it is easier to assemble the blower A1.

Each stationary blade 33 has a plate shape, and is inclined in a direction opposite to the direction of rotation of the impeller 20 as each stationary blade 33 extends upward. An impeller 20 side of each stationary blade 33 is curved in a convex shape. Outer edges of the plurality of stationary blades 33 contact the blower housing 40, that is, an inner surface of the lower cover 42. The stationary blades 33 are disposed in parallel in the peripheral direction, and guide the airflow S to the lower side when driving the blower A1. The stationary blades 33 are disposed in the channel 60, and rectify the airflow S that flows in the channel 60.

The stationary blades 33 are disposed at equal intervals in the peripheral direction at the outer surface of the upper motor housing 31 in the radial direction. This makes it possible to bring the airflow S closer to a state in which the airflow S is symmetrical with respect to an axis at the outer surface of the upper motor housing 31 in the radial direction, and to bring the cooling characteristics of the upper motor housing 31 closer to a state in which the cooling characteristics are uniform in the peripheral direction.

When the motor 10 rotates, the coils 133 and portions in the vicinity thereof generate heat. This heat is transmitted to the upper motor housing 31. The stationary blades 33 that protrude outward are provided at an outer peripheral surface 300 of the upper motor housing 31, and are disposed in the channel 60. Therefore, the stationary blades 33 rectify the airflow S, and serve as heat-dissipating fins that allow the heat of the upper motor housing 31 to escape to the outside. This makes it possible to efficiently cool the upper motor housing 31 that has been made hot by the heat of the stator 13.

The lower motor housing 32 is provided below the upper motor housing 31 in the axial direction. The lower motor housing 32 includes a lower housing bottom portion 321 and a lower housing cylindrical portion 322. The lower housing bottom portion 321 has the shape of a plate that extends in a direction orthogonal to the central axis C. The lower housing cylindrical portion 322 is a cylindrical body that extends in the axial direction. The lower housing bottom portion 321 is integrally connected to a lower end portion of the lower housing cylindrical portion 322 in the axial direction.

The lower housing bottom portion 321 includes a lower bearing holding portion 323 and a lower axial hole 324. The lead wires 130 that are connected to the coils 133 of the stator 13 extend through the lower housing bottom portion 321 in the axial direction. The circuit board 50 is disposed below the lower motor housing 32. The lead wires 130 extending through the lower housing bottom portion 321 are connected to a circuit, that is, a wiring pattern on the circuit board 50.

The lower bearing holding portion 323 protrudes upward in the radial direction from a central portion of the lower housing bottom portion 321, and includes a recessed portion where the central portion is recessed downward. The outer ring of the lower bearing Br2 is secured to the recessed portion of the lower bearing holding portion 323. The lower axial hole 324 is a through hole that extends in the axial direction through the central portion of the lower housing bottom portion 321. The shaft 11 extends through the lower axial hole 324. A central axis of the lower bearing holding portion 323 and a central axis of the lower axial hole 324 coincide with each other.

The lower motor housing 32 is mounted on the lower side of the upper motor housing 31. That is, an upper end portion of the lower housing cylindrical portion 322 in the axial direction contacts a lower end portion of the upper housing cylindrical portion 312 of the upper motor housing 31 in the axial direction. This causes at least a part of a lower surface of the upper motor housing 31 to cover the lower motor housing 32. The lower motor housing 32 is secured to the upper motor housing 31 by using a fastener, such as a screw. The upper motor housing 31 and the lower motor housing 32 may be made of the same material or different materials.

When the upper motor housing 31 and the lower motor housing 32 are secured to each other, the upper bearing Br1 that rotatably supports the upper side of the shaft 11 is held by the upper bearing holding portion 313, and the lower bearing Br2 that rotatably supports the lower side of the shaft 11 is held by the lower bearing holding portion 323. This causes the shaft 11 and the rotor 12 secured to the shaft 11 to be rotatably supported by the motor housing 30 via the upper bearing Br1 and the lower bearing Br2.

Next, the impeller 20 is described with reference to the drawings. The impeller 20 is a so-called diagonal-flow impeller formed from a resin molded part, and includes a hub portion 21 and a plurality of blades 22. The impeller 20 is made of a resin called engineering plastic. Engineering plastic is a resin having mechanical characteristics, such as strength and heat resistance, that are better than those of other resins. The impeller 20 may be made of, for example, a metal. The diameter of the hub portion 21 increases towards the lower side. In other words, the impeller 20 includes the hub portion 21 whose diameter increases towards the lower side. That is, the diameter of the hub portion 21 gradually increases towards the lower side.

The hub portion 21 includes a lower recessed portion 211 and a boss portion 212. A hole portion 213 to which the shaft 11 of the motor 10 is press-fitted is provided at the center of the boss portion 212 (on the central axis C). Therefore, the boss portion 212 and the shaft 11 are connected to each other, and the impeller 20 rotates around the central axis C as a center. That is, when the impeller 20 is secured to the shaft 11 and the motor 10 is driven, the impeller 20 rotates together with the shaft 11. When the impeller 20 rotates, the airflow S is generated.

The plurality of blades 22 are provided in parallel in the peripheral direction on an outer surface 214 of the hub portion 21. In the embodiment, the blades 22 are provided in parallel on the outer surface 214 of the hub portion 21 at determined intervals in the peripheral direction, and are integrally molded with the hub portion 21. An upper portion of each blade 22 is disposed forwardly of its lower portion in a rotation direction. That is, each blade 22 is inclined with respect to the central axis C.

Since the lower recessed portion 211 of the hub portion 21 of the impeller 20 is provided, it is possible to reduce the weight of the hub portion 21. When the impeller 20, which is a rotating portion, is lighter, it is possible to reduce power consumption, and to facilitate high-speed rotation. In addition, it is possible to suppress the occurrence of sink marks when the impeller 20 is being molded. Since a gap between a lower surface of the hub portion 21 in the axial direction and an upper surface of the motor housing 30 is narrow, the airflow S generated by the impeller 20 does not easily flow into a portion between the hub portion 21 and the motor housing 30. Therefore, it is possible to suppress a reduction in blowing efficiency.

Next, the blower housing 40 is described. The blower housing 40 surrounds an outer side of the upper motor housing 31 in the radial direction with a gap therebetween. The blower housing 40 includes the impeller cover 41 and the lower cover 42.

The impeller cover 41 is disposed on at least an outer side of the impeller 20 in the radial direction. The impeller cover 41 is a guide that directs the airflow S generated by the rotation of the impeller 20 in the axial direction. The impeller cover 41 includes the intake opening 43 that opens vertically (axial direction). The intake opening 43 has a bell mouth 431 bent inwardly and extending downward from an upper end thereof. This causes the diameter of the intake opening 43 to be smoothly reduced from the upper side towards the lower side. When, in the impeller cover 41, the intake opening 43 has the bell mouth 431, it is possible to smoothly suck in air. This increases the amount of air that is sucked in from the intake opening 43 when the impeller 20 rotates. Therefore, it is possible to increase the blowing efficiency of the blower A1.

In the blower A1 of the embodiment, the impeller cover 41 is secured to the lower cover 42. In an exemplary securing method, for example, a protrusion may be provided on an outer surface of the lower cover 42 and the impeller cover 41 may be provided with a beam portion extending downward in the axial direction and having a recessed portion that is disposed in a front-end-side inner surface and that is recessed outward in the radial direction. When the impeller cover 41 is moved in the axial direction towards the lower cover 42, the beam portion is flexed and the protrusion of the lower cover 42 is inserted into the recessed portion of the beam portion of the impeller cover 41 to secure the impeller cover 41 to the lower cover 42. The securing method is not limited to this method. It is possible to widely use securing methods that make it possible to suppress movement in the axial direction and the peripheral direction. Desirably, they can be positioned in the peripheral direction and can be easily attached and detached.

The lower cover 42 is a cylindrical cover having a circular shape in cross section and extending in the axial direction. The lower cover 42 is disposed on the outer side of the upper motor housing 31 in the radial direction. That is, the blower housing 40 faces the outer surface of the motor housing 30 in the radial direction with a gap therebetween. In the embodiment, the blower housing 40 (the lower cover 42) is disposed apart from the outer side of the upper motor housing 31 in the radial direction with a gap therebetween. The plurality of stationary blades 33 are disposed side by side at equal intervals in the peripheral direction in the gap between the lower cover 42 and the upper motor housing 31.

The lower cover 42 includes openings in an upper end portion and a lower end portion thereof. The upper end portion of the lower cover 42 is connected to a lower end portion of the impeller cover 41. The lower end portion of the impeller cover 41 is inserted into the lower cover 42. An inner surface of the impeller cover 41 is smoothly, for example, differentiably continuous with the inner surface of the lower cover 42. Therefore, any disturbance in the airflow S is suppressed by making smooth the inner surface of the blower housing 40.

Although the upper motor housing 31 and the lower cover 42 may be an integrally molded body, the upper motor housing 31 and the lower cover 42 are not limited thereto. For example, the upper motor housing 31 and the lower cover 42 may be formed as separate members. When the lower cover 42 is formed separately from the upper motor housing 31, the impeller cover 41 and the lower cover 42 may be integrated with each other.

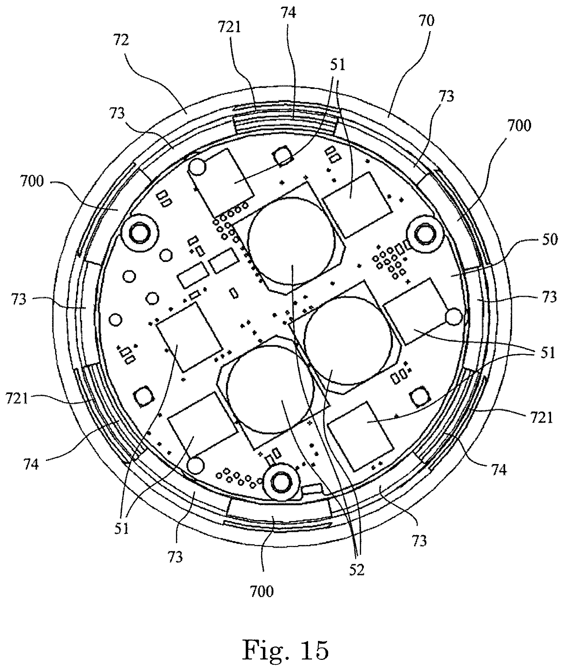

Fig. 15 is a plan view of the circuit board and the circuit-board case surrounding the circuit board. As shown in Figs. 12 and 13, the circuit board 50 is disposed below the lower motor housing 32 in the axial direction. The circuit board 50 is circular when viewed in the axial direction. The circuit board 50 is accommodated in the circuit-board case 70. Circuits for driving the motor 10, such as a power supply circuit and a control circuit, are formed at the circuit board 50.

As shown in Fig. 15, the circuit board 50 includes a printed circuit made by a metallic film. At least field effect transistors (FETs 51) and electrolytic capacitors 52 are provided in the printed circuit. Electronic components other than the FETs 51 and the electrolytic capacitors 52 are also provided in the printed circuit. Although the FETs 51 are used as transistors, the transistors are not limited thereto, so that, for example, bipolar transistors, IGBTs, or MOSFETs may also be used. Although the electrolytic capacitors 52 are used as capacitors, the capacitors are not limited thereto, so that, for example, ceramic capacitors or film capacitors may also be used.

As shown in Fig. 15, six FETs 51 are provided on the circuit board 50. The six FETs 51 are disposed closer to the outer side in the radial direction than an intermediate portion (such as the center) between the center of the circuit board 50 and an outer edge of the circuit board 50 in the radial direction. Three electrolytic capacitors 52 are provided on the circuit board 50. The three electrolytic capacitors 52 are disposed closer to the inner side in the radial direction than the intermediate portion (such as the center) between the center of the circuit board 50 and the outer edge of the circuit board 50 in the radial direction. As shown in Fig. 12, the FETs 51 and the electrolytic capacitors 52 are disposed on an upper surface of the circuit board 50 in the axial direction.

The airflow S generated by the rotation of the impeller 20 flows into the channel 60. Then, the airflow S is blown out to the outside of the blower A1 from the exhaust portion 61. The airflow S that is blown out from the exhaust portion 61 branches into a blowout airflow S1 that is blown out to the outside of the blower A1 and the inflow airflow S2 that flows into the circuit-board case 70.

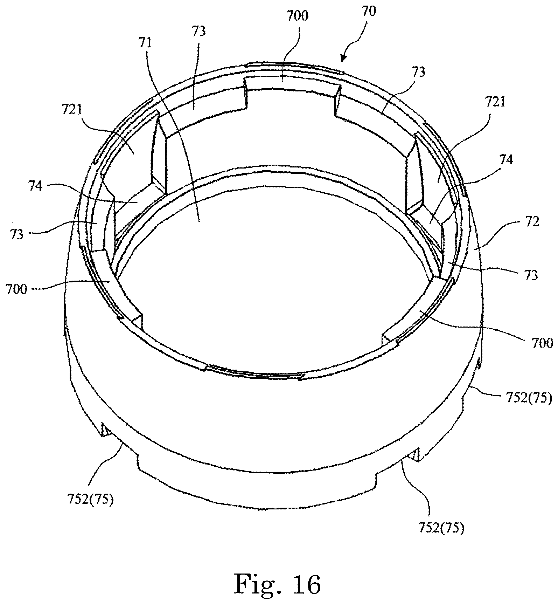

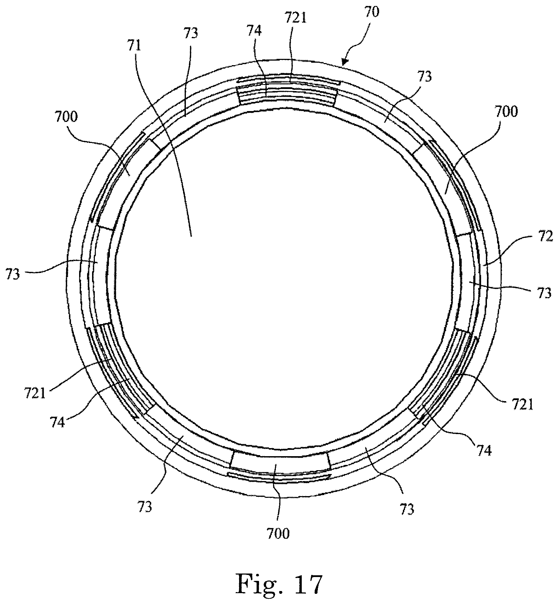

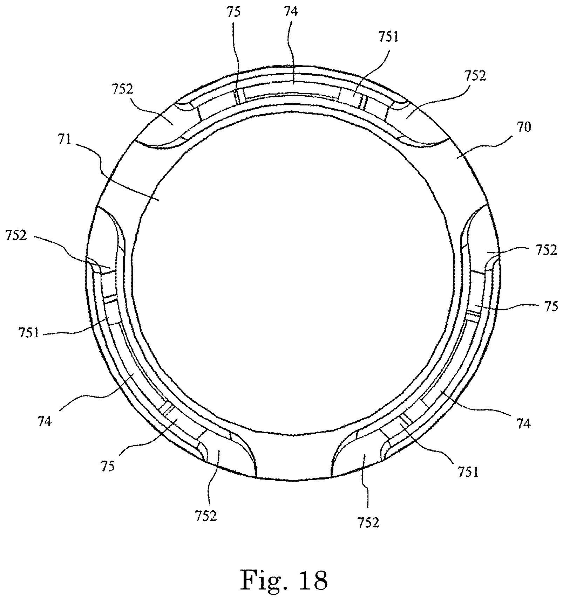

Here, the circuit-board case 70 is described. Fig. 16 is a perspective view of an example of the circuit-board case that is used in the blower according to the present disclosure. Fig. 17 is a plan view of the circuit-board case shown in Fig. 16. Fig. 18 is a bottom view of the circuit-board case. As shown in Fig. 15, the blower A1 includes the circuit-board case 70 disposed below the lower motor housing 32.

As shown in Figs. 16 and 17, the circuit-board case 70 includes a circuit-board-case bottom plate portion 71, a circuit-board-case cylindrical portion 72, circuit-board-case inlets 73, and circuit-board-case outlets 74. The circuit-board-case bottom plate portion 71 has a circular shape when viewed from the axial direction. The circuit-board-case cylindrical portion 72 has a cylindrical shape extending upward in the axial direction from an outer edge of the circuit-board-case bottom plate portion 71 in the radial direction. That is, the circuit-board case 70 has a cylindrical shape having an open top and a bottom.

As shown in Figs. 12 and 15, an outer surface of the circuit-board-case cylindrical portion 72 in the radial direction has an inclination where the diameter gradually becomes larger towards the lower side in the axial direction. As shown in Figs. 15 and 16, an upper end portion of the circuit-board-case cylindrical portion 72 in the axial direction includes a stepped portion 700 having a surface extending inward in the radial direction. When the circuit-board case 70 is mounted on the lower side of the lower motor housing 32 in the axial direction, the stepped portion 700 contacts a lower end portion of the lower motor housing 32 in the axial direction. That is, an inner surface of the upper end portion of the circuit-board-case cylindrical portion 72 in the axial direction contacts an outer surface of the lower end portion of the lower motor housing 32 in the axial direction.

At least a part of the inner surface of the upper end portion of the circuit-board-case cylindrical portion 72 in the axial direction may contact the outer surface of the lower end portion of the lower motor housing 32 in the axial direction. This makes it possible to increase an opening area of the circuit-board-case inlets 73 that are formed in an upper end portion of the circuit-board case 70 in the axial direction, that is, to increase the amount of inflow airflow S2 that flows in from the circuit-board-case inlets 73. The upper end portion of the circuit-board-case cylindrical portion 72 in the axial direction is disposed closer to the outer side in the radial direction than an outer surface of the lower motor housing 32 in the radial direction, and is disposed closer to an inner side in the radial direction than the inner surface of the lower cover 42 of the blower housing 40 in the radial direction.

The circuit-board-case inlets 73 are formed in the upper end portion of the circuit-board-case cylindrical portion 72. The circuit-board-case inlets 73 are recessed portions that are recessed outwardly in the radial direction from the inner surface of the upper end portion of the circuit-board-case cylindrical portion 72. When the inner surface of the upper end portion of the circuit-board-case cylindrical portion 72 in the axial direction contacts the outer surface of the lower end portion of the lower motor housing 32 in the axial direction, a gap is formed between the lower motor housing 32 and the circuit-board-case inlets 73, which are recessed portions. This gap allows an outer side and an inner side of the circuit-board case 70 to communicate with each other. That is, when the inner surface of the upper end portion of the circuit-board-case cylindrical portion 72 in the axial direction contacts the outer surface of the lower end portion of the lower motor housing 32 in the axial direction, the circuit-board-case inlets 73 allow the outer side and the inner side of the circuit-board case 70 to communicate with each other.

In the circuit-board case 70, six circuit-board-case inlets 73 are disposed at equal intervals in the peripheral direction (see Figs. 15 and 17). However, the number of circuit-board-case inlets 73 is not limited to six. When the plurality of circuit-board-case inlets 73 are provided, the plurality of circuit-board-case inlets 73 may be disposed at different intervals in the peripheral direction. As shown in Fig. 12, the circuit-board-case inlets 73 are disposed below the exhaust portion 61 in the axial direction.

As shown in Figs. 15 and 16, recessed grooves 721 extending in the axial direction are provided in an inner surface of the circuit-board-case cylindrical portion 72. The recessed grooves 721 extend downward in the axial direction. Lower end portions thereof in the axial direction are connected to the circuit-board-case outlets 74 in the circuit-board-case bottom plate portion 71. The circuit-board-case outlets 74 are provided in the circuit-board-case bottom plate portion 71. The circuit-board-case outlets 74 are through holes that extend through the circuit-board-case bottom plate portion 71 in the axial direction. Three circuit-board-case outlets 74 are provided in the circuit-board case 70. The number of circuit-board-case outlets 74 is not limited to three. The size and the number of circuit-board-case outlets 74 are widely selectable from those that allow the inflow airflow S2 that has flown in from the circuit-board-case inlets 73 to be efficiently discharged to the outer side of the circuit-board case 70.

As shown in Fig. 17, when the circuit-board case 70 is viewed from the axial direction, the circuit-board-case inlets 73 and the circuit-board-case outlets 74 are disposed at locations that differ from each other in the peripheral direction.

The blower A1 has the above-described structure. Next, the operation of the blower A1 is described. When electrical current is supplied to the coils 133 via the lead wires 130, the motor 10 is driven. When the motor 10 is driven, the shaft 11 rotates, and the impeller 20 secured to the shaft 11 rotates. When the impeller 20 rotates, the airflow S is generated (see Fig. 12).

The airflow S generated by the rotation of the impeller 20 flows into the channel 60. The airflow S that has flown into the channel 60 is rectified by the stationary blades 33. The stationary blades 33 cause the airflow S to flow in a state closer to a state in which the airflow S is symmetrical with respect to an axis with the central axis C as the center. Then, the airflow S is blown out to the outside of the blower A1 from the exhaust portion 61. The circuit-board-case inlets 73 are disposed below the exhaust portion 61 in the axial direction. Therefore, the airflow S that is blown out from the exhaust portion 61 branches into the blowout airflow S1 that is blown out to the outside of the blower A1 and the inflow airflow S2 that flows into the circuit-board case 70 from the circuit-board-case inlets 73.

The upper end portion of the circuit-board-case cylindrical portion 72 in the axial direction is disposed closer to the outer side in the radial direction than the outer surface of the lower motor housing 32 in the radial direction, and is disposed closer to the inner side in the radial direction than the inner surface of the lower cover 42 of the blower housing 40 in the radial direction. This makes it easier to divide a part of the airflow S blown out from the exhaust portion 61 into the inflow airflow S2, and allows the inflow airflow S2 to easily flow into the circuit-board case 70. Further, since the outer surface of the circuit-board-case cylindrical portion 72 in the radial direction has an inclination where the diameter gradually becomes larger towards the lower side in the axial direction, the airflow S is easily divided into the inflow airflow S2, and the inflow airflow S2 easily flows into the circuit-board case 70.

The inflow airflow S2 that has flown in from the circuit-board-case inlets 73 includes a velocity component that faces downward in the axial direction, and a velocity component that faces inward in the radial direction. Therefore, the inflow airflow S2 flows downward in the axial direction and inward in the radial direction from the circuit-board-case inlets 73. Electronic components (here, for example, FETs 51 and electrolytic capacitors 52) are disposed on the upper surface of the circuit board 50 in the axial direction. The inflow airflow S2 is blown against the upper surface of the circuit board 50, that is, the electronic components (here, for example, the FETs 51 and the electrolytic capacitors 52) provided on the circuit board 50. Since the inflow airflow S2 that has flown in from the circuit-board-case inlets 73 is air on the outer side of the circuit-board case 70, the temperature of the air on the outer side of the circuit-board case 70 is lower than air on the inner side of the circuit-board case 70. Therefore, the inflow airflow S2 takes away the heat from, that is, cools the electronic components (here, for example, the FETs 51 and the electrolytic capacitors 52) provided on the circuit board 50.

The inflow airflow S2 is also blown against the wiring pattern that is formed on the circuit board 50, and the wiring pattern is also cooled. Since the electronic components are provided in the wiring pattern, cooling the wiring pattern also indirectly cools the electronic components. For example, when the circuit board 50 is a double-sided circuit board, cooling the wiring pattern on the upper surface by using the inflow airflow S2 also indirectly cools the electronic components mounted on the lower surface.

The FETs 51 are disposed closer to the outer side in the radial direction than the intermediate portion between the center of the circuit board 50 and the outer edge of the circuit board 50 in the radial direction. As shown in Fig. 15, when the circuit board 50 and the circuit-board case 70 are viewed in the axial direction, the six FETs each overlap in the radial direction a different circuit-board-case inlet 73 disposed in the circuit-board case 70. Therefore, a large portion of the inflow airflow S2 that has flown in from the circuit-board-case inlets 73 is directly blown against the FETs 51. This causes the FETs 51 to be efficiently cooled by the inflow airflow S2. Not all of the FETs 51 need to be disposed at a location that overlaps a circuit-board-case inlet 73 in the radial direction. However, it is desirable that at least one FET 51 overlap a circuit-board-case inlet 73 in the radial direction.

The height of the electrolytic capacitors 52 in the axial direction when the electrolytic capacitors 52 are provided on the upper surface of the circuit board 50 is higher than the heights of the other electronic components that are provided on the circuit board 50. Therefore, the inflow airflow S2 that has struck the electrolytic capacitors 52 is reflected by the electrolytic capacitors 52, and flows towards the outer side in the radial direction. Since the electrolytic capacitors 52 are disposed inwardly of the intermediate portion between the center of the circuit board 50 and the outer edge of the circuit board 50 in the radial direction, the inflow airflow S2 reflected by the electrolytic capacitors 52 is blown against the electronic components, such as the FETs 51, that are disposed outwardly of the intermediate portion between the center of the circuit board and the outer edge of the circuit board in the radial direction. Therefore, it is possible to efficiently cool the FETs 51.

That is, by surrounding the circuit board 50 with the circuit-board case 70, the inflow airflow S2 easily flows into the circuit board 50. The inflow airflow S2 that has flown into the circuit-board case 70 is directly and/or in large amounts blown against the FETs 51. Among the electronic components that are provided on the circuit board 50, the FETs 51 generate a large amount of heat, that is, their temperatures during driving become high. When the inflow airflow S2 efficiently cools the FETs 51, it is possible to suppress a rise in the temperatures during driving of the FETs 51 themselves and the electronic components that are provided near the FETs 51. This makes it possible to stably operate the blower A1.

The circuit-board case 70 includes the circuit-board-case outlets 74 below the circuit-board-case inlets 73 in the axial direction. Therefore, the inflow airflow S2 that has flown in from the circuit-board-case inlets 73 are discharged to the outside of the circuit-board case 70 from the circuit-board-case outlets 74.

As shown in Fig. 15, the outside diameter of the circuit board 50 that is accommodated in the circuit-board case 70 is the same or substantially the same as that of the inner surface of the circuit-board-case cylindrical portion 72. In such a case, the inflow airflow S2 that has flown in from the circuit-board-case inlets 73 does not easily move below the circuit board 50 in the axial direction. Accordingly, in the circuit-board case 70, the inner surface of the circuit-board-case cylindrical portion 72 includes the recessed grooves 721 extending in the axial direction. Since the circuit-board-case cylindrical portion 72 includes the recessed grooves 721, even if the outer edge of the circuit board 50 is in contact with or is close to the inner surface of the circuit-board-case cylindrical portion 72, the inflow airflow S2 can flow below the circuit board 50 in the axial direction. In addition, since the lower sides of the recessed grooves 721 in the axial direction are connected to the circuit-board-case outlets 74, it is possible to efficiently discharge the inflow airflow S2 to the outside of the circuit-board case 70.

As shown in Fig. 15, when viewed in the axial direction, the circuit-board-case outlets 74 are provided at positions that differ from those of the circuit-board-case inlets 73 in the peripheral direction. Therefore, discharge of the inflow airflow S2 that has flown in from the circuit-board-case inlets 73 from the circuit-board-case outlets 74 without being blown against the circuit board 50 is suppressed. Consequently, it is possible to increase the cooling effect on the electronic components (here, the FETs 51 and the electrolytic capacitors 52) provided on the circuit board 50 by the inflow airflow S2.

Accordingly, in the circuit-board case 70, the inflow airflow S2 that has flown towards the inner side can be effectively discharged to the outer side from the circuit-board-case outlets 74. Therefore, it is possible to suppress turbulence in the inside of the circuit-board case 70 or an increase in the internal air pressure of the circuit-board case 70, which occur when the inflow airflow S2 that has flown into the circuit-board case 70 cannot be discharged to the outside.

Although the airflow S that flows through the channel 60 is rectified by the stationary blades 33, variations in pressure occur in the peripheral direction. That is, the pressure on the outer side of the circuit-board-case inlets 73 varies. In the circuit-board case 70, by discharging the inflow airflow S2 that has flown towards the inner side to the outside, even if the pressure on the outer side of the circuit-board-case inlets 73 becomes low, the occurrence of a case in which the pressure on the inner side of the circuit-board case 70 becomes higher than the pressure on the outer side of the circuit-board case 70 is suppressed, so that it is possible to suppress reverse flow of the airflow S from the inner side towards the outer side in the vicinity of the circuit-board-case inlets 73. This makes it possible to suppress a reduction in the blowing efficiency of the blower A1.

As shown in Fig. 18, a lower surface of the circuit-board-case bottom plate portion 71 of the circuit-board case 70 has circuit-board-case lower groove portions 75. As described above, the blower A1 is mounted on a mounting unit of, for example, a vacuum cleaner, and used. When the blower A1 is mounted on the mounting unit, the circuit-board-case bottom plate portion 71 of the circuit-board case 70 may be mounted on a flat plate by bringing the circuit-board-case bottom plate portion 71 in close contact with the flat plate. In addition, the circuit-board-case bottom plate portion 71 may be mounted on the flat plate by, for example, bonding or welding. In the circuit-board case 70, the circuit-board-case outlets 74 are covered by the flat plate, as a result of which the inflow airflow S2 is no longer blown out from the circuit-board-case outlets 74 or is not easily blown out from the circuit-board-case outlets 74.

Accordingly, in the circuit-board case 70 according to the embodiment, the lower surface of the circuit-board-case bottom plate portion 71 has the circuit-board-case lower groove portions 75. As shown in Fig. 18, each circuit-board-case lower groove portion 75 includes a communicating portion 751 and a wide width portion 752. Each communicating portion 751 communicates with a lower side of its corresponding circuit-board-case outlet 74 in the axial direction. That is, the outer side of each circuit-board-case outlet 74 communicates with its corresponding communicating portion 751. The wide width portions 752 extend smoothly towards two sides in the peripheral direction from their corresponding communicating portion 751. By virtue of such a structure, in the circuit-board case 70, even if a different member exists at a location that overlaps the circuit-board-case outlets 74 in the axial direction, the circuit-board-case outlets 74 communicate with the outer side of the circuit-board case 70 via the circuit-board-case lower groove portions 75.

In the motor 10, when electrical current is supplied to the coils 133, the coils 133 and the stator core 131 generate heat. The airflow S generated at the impeller 20 flows along an outer surface of the upper housing cylindrical portion 312. The plurality of stationary blades 33 formed integrally with the outer surface of the upper housing cylindrical portion 312 are provided in the channel 60 where the airflow S flows. Therefore, the surface area that the airflow S contacts is increased, and heat-dissipating efficiency is increased. This makes it possible to reduce the temperature of the motor 10 and to suppress a reduction in efficiency caused by the heat of the motor 10. Therefore, it is possible to suppress a reduction in the blowing efficiency of the blower A1.

By efficiently cooling the circuit board 50, where circuits for driving the motor 10 are formed, and the electronic components, here, the FETs 51 and the electrolytic capacitors 52, provided on the circuit board 50, it is possible to stabilize the operation of the circuits. Therefore, it is possible to stabilize the operation of the blower A1 and, thus, to stabilize the operation of the vacuum cleaner 100.

Even if, in a place where the blower A1 is mounted, a member that contacts a bottom surface of the circuit-board-case bottom plate portion 71 exists at a location that overlaps the circuit-board-case outlets 74 in the axial direction, the air (airflow) that is discharged from the circuit-board-case outlets 74 pass the circuit-board-case lower groove portions 75, and is effectively discharged to the outer side of the circuit-board case 70. Therefore, the inflow airflow S2 that has flown in from the circuit-board-case inlets 73 and that has cooled the electronic components provided on the circuit board 50 can be effectively discharged to the outside of the circuit-board case 70.

The wide width portions 752 of the circuit-board-case lower groove portions 75 may open on the outer side of the circuit-board case 70 in the radial direction. This makes it possible to, even if the entire lower surface of the circuit-board-case bottom plate portion 71 is airtightly covered, discharge the airflow that flows out from the circuit-board-case outlets 74 to the outer side of the circuit-board case 70.

In the embodiment, the circuit-board-case outlets 74 are through holes that extend through the circuit-board-case bottom plate portion 71 in the axial direction. However, the circuit-board-case outlets 74 are not limited thereto. For example, the circuit-board-case outlets 74 may be through holes that extend through the circuit-board-case cylindrical portion 72 from the inner side to the outer side of the circuit-board case 70 at locations below the circuit-board-case inlets 73 in the axial direction. At this time, the circuit-board-case cylindrical portion 72 may be one that is disposed below the circuit board 50 in the axial direction. It is desirable that the gap that is capable of passing the inflow airflow S therethrough be one that is situated between the inner surface of the circuit-board-case cylindrical portion 72 and the outer edge of the circuit board 50. The circuit board 50 may have a through hole, or as a structure for disposing a plurality of circuit boards side by side, gaps that pass the inflow airflow S2 therethrough may be formed between the plurality of circuit boards.

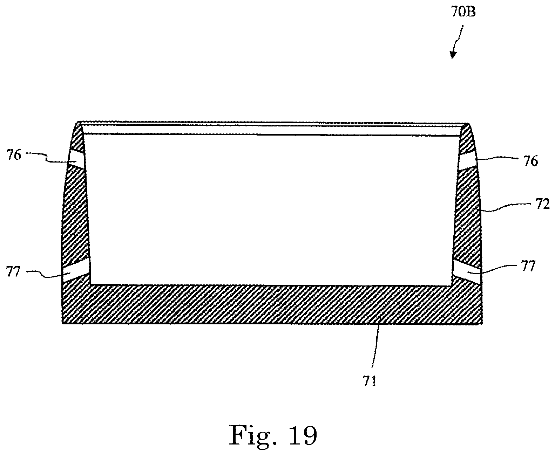

Another embodiment of a circuit-board case that is used in the blower according to the present disclosure is described with reference to the drawings. Fig. 19 is a vertical sectional view of a circuit-board case 70B. The circuit-board case 70B shown in Fig. 19 includes circuit-board-case inlets 76 instead of the circuit-board-case inlets 73; and circuit-board-case outlets 77 instead of the circuit-board-case outlets 74. Portions other than such portions have the same structures as those of the circuit-board case 70 shown in the previous embodiment. Therefore, the portions of the circuit-board case 70B that are the same as those of the circuit-board case 70 are given the same reference numerals as those given to the same portions of the circuit-board case 70, and the portions of the circuit-board case 70B that are substantially the same as those of the circuit-board case 70 are not described in detail below.

As shown in Fig. 19, the circuit-board case 70B includes the circuit-board-case inlets 76 and the circuit-board-case outlets 77. The circuit-board-case inlets 76 are disposed closer to the lower side in the axial direction than an upper end portion of the circuit-board-case cylindrical portion 72 in the axial direction. The circuit-board-case inlets 76 extend through the circuit-board-case cylindrical portion 72 in the radial direction. That is, the circuit-board-case inlets 76 allow the outer side and the inner side of the circuit-board-case cylindrical portion 72 to communicate with each other in the radial direction. It is desirable that the circuit-board-case inlets 76 be provided at a portion where the outer surface of the circuit-board-case cylindrical portion 72 is inclined outward. When the circuit-board-case inlets 76 are provided at the inclined portion, the airflow S blown out from the exhaust portion 61 is easily branched into the inflow airflow S2, and the flow quantity of the inflow airflow S2 can be increased. The circuit-board-case inlets 76 may be inclined from the outer side in the radial direction towards the inner side in the radial direction, and downward in the axial direction. Such an inclination makes it possible to reduce the resistance of the inflow airflow S2 that has flown into the circuit-board-case inlets 76, and to suppress a reduction in the air-flow velocity of the inflow airflow S2. This makes it possible to suppress a reduction in the flow quantity of the inflow airflow S2.

The circuit-board-case outlets 77 are disposed below the circuit-board-case inlets 76 of the circuit-board-case cylindrical portion 72 in the axial direction. By disposing the circuit-board-case outlets 77 below the circuit-board-case inlets 76 in the axial direction, the inflow airflow S2 that has flown in from the circuit-board-case inlets 76 can be efficiently discharged from the circuit-board-case outlets 77.

Even more specifically, the circuit board 50 is disposed between the circuit-board-case inlets 76 and the circuit-board-case outlets 77 in the axial direction. Therefore, the inflow airflow S2 that has flown in from the circuit-board-case inlets 76 is temporarily blown against the electronic components (here, for example, the FETs 51 and the electrolytic capacitors 52) provided on the circuit board 50. The inflow airflow S2 that has cooled the FETs 51 and the electrolytic capacitors 52 is discharged to an outer side of the circuit-board case 70B from the circuit-board-case outlets 77 disposed below the circuit board 50 in the axial direction.

Since the circuit-board-case inlets 76 and the circuit-board-case outlets 77 allow the outer side and the inner side of the circuit-board-case cylindrical portion 72 in the radial direction to communicate with each other, the inflow airflow S2 easily flows into the circuit-board case 70B and the inflow airflow S2 that flows in the circuit-board case 70B easily flows to the outside of the circuit-board case 70B. This makes it possible to effectively cool the electronic components provided on the circuit board 50.

The other features are the same as those of the previous embodiment.

The present disclosure is applicable to, for example, a blower and a vacuum cleaner including the blower.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A blower comprising:
an impeller (20) that is rotatable around a central axis (C);
a motor (10) that includes a stator (13) and a rotor (12) and that together with the rotor (12) rotates the impeller (20);
a motor housing (30), at least a part of the motor housing (30) being disposed on an outer side of the motor (10) in a radial direction;
a blower housing (40) that is disposed on an outer side of the impeller (20) in the radial direction, and that opposes an outer surface of the motor housing (30) in the radial direction with a gap therebetween;
an electronic component (15) that is disposed below the stator (13) in an axial direction; and
a circuit board (50) that is disposed below the motor housing (30) in the axial direction,
wherein the motor housing (30) includes a motor housing inlet (320) that has a cylindrical shape extending in the axial direction, that extends below a lower end of the blower housing (40) in the axial direction and surrounds an outer side of the electronic component (15) in the radial direction, that is formed below the lower end of the blower housing (40) in the axial direction, and that allows an inner side and an outer side of the motor housing (30) in the radial direction to communicate with each other.

2. The blower according to Claim 1, wherein the motor housing (30) includes a plurality of the motor housing inlets (320).

3. The blower according to Claim 2, wherein the plurality of the motor housing inlets (320) are disposed at equal intervals in a peripheral direction.

4. The blower according to any one of Claims 1 to 3, wherein the motor housing (30) includes
an upper motor housing (31), and
a lower motor housing (32) that is disposed below the upper motor housing (31) in the axial direction,
wherein the lower motor housing (32) is disposed below the lower end of the blower housing (40) in the axial direction and surrounds the outer side of the electronic component (15) in the radial direction, and
wherein the motor housing inlet (320) or the plurality of the motor housing inlets (320) are provided in the lower motor housing (32).

5. The blower according to Claim 4, wherein the lower motor housing (32) includes
a lower-housing small diameter portion (325),
a lower-housing large diameter portion (326) whose diameter is larger than that of the lower-housing small diameter portion (325), and
a lower-housing connection portion (327) that connects the lower-housing large diameter portion (326) and the lower-housing small diameter portion (325) to each other,
wherein an upper end portion of the lower-housing large diameter portion (326) in the axial direction is disposed on an outer side of the upper motor housing (31) in the radial direction and on an inner side of the blower housing (40) in the radial direction, and
wherein the motor housing inlet (320) or the plurality of the motor housing inlets (320) are formed by the upper end portion of the lower-housing large diameter portion (320) in the axial direction and by an upper end portion of the lower-housing connection portion (327) in the axial direction.

6. The blower according to any one of Claims 1 to 5, wherein when viewed in the axial direction, the motor housing inlet (320) or each motor housing inlet (320) includes a region that overlaps the electronic component (15) in the radial direction.

7. The blower according to any one of Claims 1 to 6, wherein the stator (13) includes a plurality of coils (133) that are formed by winding conducting wires around a stator core (131) opposing the rotor (12) in the radial direction via an insulator (132), and
wherein the electronic component (15) is connected to the plurality of coils (133) and protrudes below the stator (13) in the axial direction.

8. The blower according to Claim 7, wherein the insulator (132) is provided with a holder portion (14) that integrally protrudes below the motor (10) in the axial direction, and
wherein the electronic component (15) is accommodated in the holder portion (14).

9. The blower according to Claim 7 or Claim 8, wherein the electronic component (15) connects the coils (133) and the circuit board (50).

10. A vacuum cleaner (100) comprising:
the blower according to any one of Claims 1 to 9.
